# EUROPÄISCHE PATENTSCHRIFT

(11) **EP 3 815 852 B1**
(45) Veröffentlichungstag und Bekanntmachung des Hinweises auf die Patenterteilung: **07.05.2025**
(21) Anmeldenummer: 19205983.0
(22) Anmeldetag: 29.10.2019
(51) Int. Cl.: B25J 5/00, B62B 3/06, B62B 5/00, B66F 9/06

(54) **FAHRERLOSE TRANSPORTVORRICHTUNG UND FAHRERLOSES TRANSPORTSYSTEM ZUM TRANSPORTIEREN VON GEGENSTÄNDEN**
DRIVERLESS TRANSPORT DEVICE AND TRANSPORT SYSTEM FOR TRANSPORTING OBJECTS
DISPOSITIF DE TRANSPORT SANS CONDUCTEUR ET SYSTÈME DE TRANSPORT SANS CONDUCTEUR PERMETTANT DE TRANSPORTER DES OBJETS

(43) Veröffentlichungstag der Anmeldung: 05.05.2021
(73) Patentinhaber: IMS Gear SE & Co. KGaA, 78166 Donaueschingen (DE); Antrimon (Deutschland) GmbH, 78554 Aldingen (DE)
(72) Erfinder: Huber, Matthias, 78187 Gutmadingen (DE); Klaiber, Christof, 78054 Villingen-Schwenningen (DE); Belz, Carsten, 78727 Oberndorf (DE); Nagel, Benedikt, 78085 Brigachtal (DE)
(74) Vertreter: Westphal, Mussgnug & Partner Patentanwälte mbB

(56) Entgegenhaltungen:
- WO-A1-2016/172793
- WO-A1-2019/063816
- WO-A1-2019/095804
- CN-A- 107 175 641
- CN-A- 108 927 785
- GB-A- 2 542 472
- US-A1- 2014 058 556

## Beschreibung

Die vorliegende Erfindung betrifft eine fahrerlose Transportvorrichtung und ein fahrerloses Transportsystem zum Transportieren von Gegenständen.

Im Zuge der fortschreitenden Digitalisierung von industriellen Prozessen wird auch der Transport von Gegenständen zunehmend automatisiert durchgeführt. Hierzu werden sogenannte fahrerlosen Transportvorrichtungen und fahrerlosen Transportsysteme (ATS) verwendet, welche auch als *"Automated Guide Vehicles"* (AGV) bezeichnet werden. Bei fahrerlosen Transportsystemen wird eine Mehrzahl von fahrerlosen Transportvorrichtungen zusammengefasst und wie ein Schwarm betrieben. Fahrerlose Transportsysteme werden insbesondere in der Logistik und in der Fertigung eingesetzt, wo verschiedene Gegenstände, beispielsweise Halbzeuge oder andere Komponenten, von einem ersten Ort zu einem zweiten Ort transportiert werden müssen. Dabei können beispielsweise LKWs automatisch be- und entladen werden.

In vielen Fällen werden die Gegenstände mithilfe von Ladungsträgern transportiert, beispielsweise Kisten, Boxen oder Paletten. Aus der DE 10 2013 017 062 A1 ist ein fahrerloses Transportsystem bekannt, welches zwei Förderkufen aufweist, die nach Art einer Gabel eines Gabelstaplers in die länglichen Hohlräume einer Palette eingebracht werden können. Die Förderkufen weisen eine Hubeinrichtung auf, mit welcher die Palette etwas vom Boden angehoben und anschließend zum gewünschten Ort transportiert und dort wieder abgesenkt werden kann.

Aufgrund der Tatsache, dass die Förderkufen eine deutlich größere Erstreckung in Längsrichtung im Vergleich zur Querrichtung aufweisen, ist die Manövrierbarkeit insbesondere dadurch begrenzt, dass vor der Palette ausreichend Platz sein muss, dass die Förderkufen fluchtend zu den Hohlräumen ausgerichtet werden können. Auch die in der EP 2 765 101 A1 gezeigte Vorrichtung weist eine ähnliche Erstreckung wie die zuvor genannten Förderkufen auf, so dass sich auch hier eine begrenzte Manövrierbarkeit ergibt.

Ein weiteres fahrerloses Transportsystem ist in der DE 10 2013 101 561 A1 und der DE 20 2014 104 780 U1 beschrieben, welches Referenzmarken verwendet, die den Weg vorgeben, entlang das fahrerlose Transportsystem bewegt werden kann. Hierdurch ergibt sich eine beschränkte Flexibilität, da der Einsatz außerhalb der Referenzmarken nicht möglich ist. Zudem erfordert das Verlegen der Referenzmarken einen nicht unerheblichen Aufwand.

Als weiterer Stand der Technik werden die WO 2019/063816 A1, die GB 2 542 472 A, die CN 107 175 641 A, die US 2014/058556 A1, die WO 2016/172793 A1, die WO 2019/095804 A1, welche die Merkmale des Oberbegriffs des Anspruchs 1 offenbart, sowie die
CN 108 927 785 A genannt.

Wie erwähnt, ist aus der DE 10 2013 017 062 A1 ist ein fahrerloses Transportsystem bekannt, welches zwei Förderkufen aufweist, die nach Art einer Gabel eines Gabelstaplers in die länglichen Hohlräume einer Palette eingebracht werden können.

Wenn jedoch die beiden Förderkufen nicht exakt parallel zueinander und entlang der Längsachse der länglichen Hohlräume der Palette ausgerichtet sind, muss auch dann, wenn die Palette geradeaus bewegt werden soll, mit zumindest einer Förderkufe gegengelenkt werden, was zu Reibung und Abrieb führt.

Aufgabe einer Ausführungsform der vorliegenden Erfindung ist es, eine fahrerlose Transportvorrichtung zum Transportieren von Gegenständen vorzuschlagen, welche sich einfach in bestehende Transportvorgänge einbinden lässt, eine gute Manövrierbarkeit und zusätzliche, bislang noch nicht verfügbare Funktionen bereitstellt. Des Weiteren liegt einer Ausbildung der vorliegenden Erfindung die Aufgabe zugrunde, insbesondere für den Fall, dass Paletten transportiert werden, ein reproduzierbares Ausrichten der Transportvorrichtung in Bezug auf die Palette realisieren zu können.

Diese Aufgabe wird mit den in den Ansprüchen 1 und 15 angegebenen Merkmalen gelöst. Vorteilhafte Ausführungsformen sind Gegenstand der Unteransprüche.

Eine Ausführungsform der Erfindung betrifft eine fahrerlose Transportvorrichtung zum Transportieren von Gegenständen, umfassend
- eine Tragstruktur mit einer Außenkontur,
- ein an der Tragstruktur befestigtes Fahrwerk mit zumindest einem ersten Rad und einem zweiten Rad, wobei das erste Rad um eine erste Drehachse und das zweite Rad um eine zweite Drehachse drehbar im Fahrwerk gelagert sind,
- eine Antriebseinheit, mit welcher das erste Rad und das zweite Rad unabhängig voneinander antreibbar sind, und
- eine Spreizeinrichtung mit mindestens zwei Spreizarmen, wobei die Spreizarme mittels einer Verstelleinheit zwischen einer ersten Stellung und einer zweiten Stellung verstellbar sind und die Spreizarme in der zweiten Stellung zumindest teilweise über die Außenkontur hervorragen.

Die Spreizeinrichtung weist folgende Funktionen auf: Insbesondere, wenn die fahrerlose Transportvorrichtung zum Transportieren von Paletten verwendet werden soll, wird diese in den länglichen Hohlraum der Palette gefahren. In diesem Zustand befinden sich die Spreizarme in der ersten Stellung, in welcher sie sich zweckmäßigerweise innerhalb der Außenkontur befinden. Unter der Außenkontur soll der äußere Rand der Tragstruktur verstanden werden, wobei der äußere Rand der Tragstruktur auch von einem Gehäuse gebildet werden kann. Insofern stehen die Spreizarme in der ersten Stellung nicht über die Außenkontur über und behindern die Einfahrt in den länglichen Hohlraum der Palette nicht. Hat die fahrerlose Transportvorrichtung die gewünschte Position innerhalb des länglichen Hohlraums der Palette erreicht, so werden die Spreizarme in die zweite Position verstellt. Die radial äußeren Enden der Spreizarme treten dabei in Kontakt mit den Seitenwänden des länglichen Hohlraums der Palette, wodurch einerseits ein Verklemmen der fahrerlosen Transportvorrichtung mit der Palette und andererseits eine definierte Ausrichtung der fahrerlosen Transportvorrichtung in Bezug auf die Palette bewirkt wird. Zweckmäßigerweise wird dabei die fahrerlose Transportvorrichtung gegenüber der Palette so ausgerichtet, dass die Drehachsen der beiden Räder senkrecht oder nahezu senkrecht zur Längsachse des länglichen Hohlraums der Palette verlaufen. Soll die Palette von einem Ort zu einem anderen Ort bewegt werden, so wird die Palette vorwiegend geradeaus bewegt. In diesem Fall muss die fahrerlose Transportvorrichtung nicht korrigierend gegenlenken, so dass keine Reibung oder kein Schlupf, die von einem Gegenlenken hervorgerufen werden, auf die beiden Räder wirkt. Die Belastungen, die im Betrieb der fahrerlosen Transportvorrichtung auf diese wirken, werden mittels der Spreizeinrichtung gegenüber bekannten fahrerlosen Transportvorrichtungen reduziert. Erfindungsgemäß ist die Spreizeinrichtung drehbar gegenüber dem Fahrwerk ausgestaltet.

Nach einer weiteren Ausführungsform weist die Spreizeinrichtung eine weitere Antriebseinheit und einen Antriebsstrang auf, mit welchem die weitere Antriebseinheit mit der Verstelleinheit zusammenwirkt. Prinzipiell wäre es möglich, die Antriebseinheit, mit welcher das erste Rad und das zweite Rad antreibbar sind, auch zum Antreiben der Verstelleinheit zu verwenden. Allerdings würde der Antriebsstrang dann relativ komplex werden. Dadurch, dass die fahrerlose Transportvorrichtung in dieser Ausführungsform eine weitere Antriebseinheit aufweist, mit welcher die Verstelleinheit der Spreizeinrichtung angetrieben werden kann, wird der Aufbau des Antriebsstrangs vereinfacht.

Gemäß einer weitergebildeten Ausführungsform ist im Antriebsstrang eine Entkopplungseinheit angeordnet, mit welcher die weitere Antriebseinheit von der Verstelleinheit trennbar ist. Wie erwähnt, dienen die Spreizarme dazu, die Transportvorrichtung im ausgefahrenen Zustand mit dem zu transportierenden Gegenstand, insbesondere mit einer Palette, zu verspannen, um ein unkontrolliertes Verrutschen zu verhindern. Ein Drehen der Transportvorrichtung im verspannten Zustand, insbesondere zum Lenken, wäre dann aber nicht ohne weiteres möglich, da sonst die im Antriebsstrang und in der weiteren Antriebseinheit vorliegenden Widerstände überwunden werden müssten. Mit der Entkopplungseinheit kann der Antriebsstrang wahlweise geöffnet oder geschlossen werden. Im geöffneten Zustand ist die weitere Antriebseinheit von der Verstelleinheit getrennt. Die Transportvorrichtung kann daher mit minimalem Kraftaufwand auch dann gedreht werden, wenn sie unter Verwendung der Spreizarme mit dem zu transportierenden Gegenstand, insbesondere mit der Palette, verspannt ist.

Eine weitergebildete Ausführungsform zeichnet sich dadurch aus, dass die Spreizeinrichtung eine Sperreinrichtung umfasst, mit welcher die Verstelleinheit zumindest dann gesperrt werden kann, wenn sich die Spreizarme in der zweiten Stellung befinden. In dieser Ausführungsform muss die weitere Antriebseinheit nicht die Haltekraft aufbringen, um die Spreizarme in der zweiten Stellung zu halten. Die Sperreinrichtung übernimmt das Aufbringen der Haltekraft, beispielsweise durch eine Verrastung mittels eines Sperrbolzens oder dergleichen. Die weitere Antriebeinheit kann in dieser Zeit ausgeschaltet werden, wodurch zudem der Energieverbrauch und die Belastung der weiteren Antriebseinheit verringert werden können.

Gemäß einer weiteren Ausführungsform weist die Spreizeinrichtung einen Winkelsensor auf, mit welchem die Drehstellung der Spreizarme in Bezug auf die erste Drehachse und/oder die zweite Drehachse bestimmbar ist. Anstelle der Drehachsen können auch andere Bezugsachsen des Fahrwerks oder der Tragstruktur gewählt werden. Allerdings eignen sich die Drehachsen deshalb als Bezugsachsen besonders gut, da diese die Fahrtrichtung der Transportvorrichtung vorgeben. Wie erwähnt, dient die Spreizeinrichtung dazu, die Transportvorrichtung mit einem Gegenstand, insbesondere mit einer Palette, zu verspannen. Insbesondere dann, wenn die Transportvorrichtung über eine Entkopplungseinrichtung verfügt, kann die Transportvorrichtung unter der Palette gedreht werden, ohne dass die Spreizarme in die erste Stellung gestellt werden müssen und die Verspannung aufgelöst werden muss. Mithilfe des Winkelsensors kann festgestellt werden, in welcher Drehstellung sich die Spreizeinrichtung in Bezug auf die Drehachse befindet. Hierdurch ist es möglich, die Spreizarme so in Bezug auf den Gegenstand, mit welchem die Transportvorrichtung verspannt werden soll, auszurichten, dass die Spreizarme möglichst parallel mit den Oberflächen des Gegenstands in Kontakt treten. Ein Verkanten wird verhindert.

Eine weitergebildete Ausführungsform zeichnet sich dadurch aus, dass die Verstelleinheit eine Synchronisierungseinheit aufweist, mit welcher die Bewegung der Spreizarme synchronisierbar ist. In dieser Ausführungsform bewegen sich die Spreizarme gleichzeitig, so dass die Zeit, die zum Verklemmen und Ausrichten der fahrerlosen Transportvorrichtung beispielsweise im länglichen Hohlraum einer Palette benötigt wird, kurz gehalten wird. Zudem wird das Ausrichten der fahrerlosen Transportvorrichtung hierdurch erleichtert und ein Verkanten verhindert.

Nach Maßgabe einer weiteren Ausführungsform kann die Verstelleinheit pro Spreizarm eine Kniehebeleinheit umfassen, mit welcher die Spreizarme verstellbar sind und welche mit der Synchronisierungseinheit synchronisiert betätigbar ist. Mittels einer Kniehebeleinheit ist es auf einfache Weise möglich, die Spreizarme zwischen der ersten und der zweiten Stellung zu bewegen. Insbesondere lässt sich die Kniehebeleinheit flach bauen, so dass sie wenig Bauraum beansprucht.

Bei einer weiteren Ausführungsform kann die Synchronisierungseinheit eine Kulissenscheibe aufweisen, welche mit den Kniehebeleinheiten zusammenwirkt. Eine Kniehebeleinheit besteht aus mindestens zwei miteinander drehbar verbundenen Schenkeln. Die Drehachsen, um welche die beiden Schenkel drehbar miteinander verbunden sind, können in die Kulissenscheibe eingreifen, wodurch die Bewegung der Spreizarme durch eine Drehung der Kulissenscheibe synchronisiert werden kann. Auf Getriebe oder dergleichen, um die Bewegung der Spreizarme zu synchronisieren, kann verzichtet werden.

Erfindungsgemäß sind die Spreizarme in vom Zentrum der fahrerlosen Transportvorrichtung radial nach außen verlaufenden Führungsbahnen verschiebbar gelagert. In dieser Ausführungsform kann die Bewegung der Spreizarme zwischen der ersten Stellung und der zweiten Stellung mit aus konstruktiver Sicht einfachen Mitteln vorgegeben werden. Für den Fall, dass die fahrerlose Transportvorrichtung zwei Spreizarme aufweist, bietet es sich an, diese entlang derselben Achse zwischen der ersten und der zweiten Stellung zu bewegen. Mittels der Führungsbahnen ist es möglich, die Bewegungen der Spreizarme untereinander auszurichten.

Bei einer weitergebildeten Ausführungsform können die Spreizarme an ihren radial äußeren Enden mit Abstützelementen federnd verbunden sein. Die Abstützelemente treten in Kontakt mit den Seitenwänden des länglichen Hohlraums der Palette oder mit Oberflächen von anderen zu transportierenden Gegenständen. Dadurch, dass die Abstützelemente federnd mit den Spreizarme verbunden sind, schlagen die Abstützelemente sanft an die Seitenwände oder an die Oberflächen an, so dass keine stoßartigen Belastungen auf die Spreizarme wirken. Die fahrerlose Transportvorrichtung und insbesondere die Spreizeinrichtung werden hierdurch geschont.

Insbesondere Paletten sind häufig nicht sehr genau gefertigt. Zudem können sich ihre Abmessungen im Betrieb beispielsweise durch Feuchtigkeitseinwirkung oder durch Abrieb ändern. Derartige Abweichungen in den Abmessungen können mit der federnden Verbindung der Abstützelemente ausgeglichen werden.

Bei einer weiteren Ausführungsform können die Spreizarme an ihren radial äußeren Enden mit einem Anschlagelement verbunden sein, wobei das Anschlagelement in der ersten Stellung an einem Anschlagelement zumindest eines weiteren Spreizarms und/oder an einer Anschlagfläche der Tragstruktur anliegt. Die Anschlagelemente geben die erste Stellung vor, so dass die erste Stellung eindeutig definiert ist. Dabei kann das Anschlagelement gegen die Tragstruktur anschlagen. Es ist aber genauso gut möglich, dass ein Anschlagelement zumindest gegen ein weiteres Anschlagelement anschlägt.

Nach Maßgabe einer weiteren Ausführungsform umfasst die fahrerlose Transportvorrichtung eine mit der Tragstruktur zusammenwirkende Hubeinrichtung zum Anheben und Absenken zumindest eines Tragabschnitts, der zum Transportieren der Gegenstände mit denselben zusammenwirkt. Es ist grundsätzlich möglich, den zu transportierenden Gegenstand beispielsweise mittels eines Krans oder eines Gabelstaplers auf die fahrerlose Transportvorrichtung aufzulegen, um den Gegenstand anschließend zum gewünschten Ziel zu bewegen. In diesem Fall ist es aber notwendig, den zu transportierenden Gegenstand anzuheben, um diesen vom Boden zu entfernen. Die fahrerlose Transportvorrichtung kann aber auch zum Bewegen von Gegenständen verwendet werden, die selbst über Rollen verfügen, beispielsweise Krankenhausbetten oder Mülltonnen. Diese Gegenstände müssen nicht zwangsläufig angehoben werden, um diese bewegen zu können.

Mittels der Hubeinrichtung ist es jedoch möglich, die fahrerlose Transportvorrichtung in eine entsprechende Ausnehmung des zu transportierenden Gegenstands, beispielsweise in den bereits erwähnten länglichen Hohlraum der Palette, hinein zu fahren, wobei die Palette noch auf dem Boden steht. Wenn die fahrerlose Transportvorrichtung in der gewünschten Position ist, wird die Hubeinrichtung aktiviert, wodurch die Palette vom Boden angehoben wird. Anschließend wird die Spreizeinrichtung aktiviert, so dass sich die fahrerlose Transportvorrichtung gegenüber der Palette ausrichten kann. Hierzu ist der Tragabschnitt drehbar in der Tragstruktur gelagert, so dass er gegenüber dem Gehäuse gedreht werden kann. Zudem wird die fahrerlose Transportvorrichtung reibschlüssig mit der Palette verbunden, so dass ein Verrutschen der Palette relativ zur fahrerlosen Transportvorrichtung weitgehend vermieden werden kann. Dies kann insbesondere dann relevant sein, wenn die Palette entlang einer geneigten Unterlage transportiert werden soll. Es ist daher auch möglich, Gegenstände zu transportieren, ohne dass diese zuvor angehoben und auf die fahrerlose Transportvorrichtung abgelegt werden. Zudem ist es ebenfalls möglich, Gegenstände zu transportieren, welche selbst keine Rollen oder dergleichen aufweisen, und daher nicht gezogen werden können.

Nach Maßgabe einer weiteren Ausführungsform ist die Außenkontur der Tragstruktur in der Draufsicht um eine Rotationsachse im Wesentlichen rotationssymmetrisch, wobei der Tragabschnitt und/oder das erste Rad und das zweite Rad innerhalb der Außenkontur angeordnet sind oder bündig mit der Außenkontur abschließen und/oder die Spreizarme in der ersten Stellung innerhalb der Außenkontur angeordnet sind. Die erste und die zweite Drehachse verlaufen üblicherweise im Wesentlichen parallel zu einer Unterlage, auf welcher das erste Rad und das zweite Rad abrollen. Diese Unterlage ist beispielsweise die Ladefläche eines LKWs oder der Boden einer Werkhalle. Die Rotationsachse soll im bestimmungsgemäßen Gebrauch der fahrerlosen Transportvorrichtung, insbesondere dann, wenn diese auf der Unterlage abrollt, im Wesentlichen senkrecht zu der Unterlage verlaufen. Unter der Außenkontur soll der äußere Rand der Tragstruktur verstanden werden, wobei der äußere Rand der Tragstruktur auch von einem Gehäuse gebildet werden kann.

In einer weitergebildeten Ausführungsform kann die Transportvorrichtung eine Sensoreinheit zum Erfassen des Umfelds der Transportvorrichtung aufweisen, wobei die Sensoreinheit in einem von der Außenkontur und der ersten Drehachse oder der zweiten Drehachse begrenzten Sensorabschnitt angeordnet ist, und die Sensoreinheit so ausgebildet ist, dass sie nur den Teil des Umfelds auf der Seite der ersten Drehachse oder der zweiten Drehachse erfasst, auf welcher die Sensoreinheit angeordnet ist.

Aus dem Stand der Technik bekannte fahrerlose Transportvorrichtungen weisen Sensoreinheiten auf, mit denen das unmittelbare Umfeld erfasst werden kann. Beispielsweise können Hindernisse identifiziert und entsprechende Gegenmaßnahmen eingeleitet werden. Je nach Art des Hindernisses kann dieses umfahren oder die fahrerlose Transportvorrichtung angehalten werden. Da von fahrerlosen Transportvorrichtungen eine nicht unerhebliche Gefahr für sich im Umfeld befindende Personen ausgeht, und um den reibungslosen Betrieb zu ermöglichen, muss das Umfeld lückenlos überwacht werden. Folglich muss die Sensoreinheit in der Lage sein, 360° des Umfelds zu erfassen. Die hierzu notwendige Sensorik ist vergleichsweise aufwendig.

In dieser Ausführungsform ist die Sensoreinheit so angeordnet, dass sie maximal 180° des Umfelds erfassen kann. Insbesondere aufgrund der Möglichkeit, die Außenkontur rotationssymmetrisch auszugestalten und die fahrerlose Transportvorrichtung mehr oder weniger auf der Stelle drehen zu können, ist ein Rückwärtsfahren nicht notwendig. Daher genügt es, nur 180° des Umfelds zu erfassen. Die Sensoreinheit ist so angeordnet, dass das in Fahrtrichtung vor der fahrerlosen Transportvorrichtung liegende Umfeld erfasst wird. Infolgedessen können die Sensoreinheit deutlich einfacher aufgebaut und die entsprechende fahrerlose Transportvorrichtung kostengünstiger bereitgestellt werden.

Bei einer weitergebildeten Ausführungsform kann die Transportvorrichtung einen Speicher für elektrische Energie aufweisen, welcher in der Draufsicht abschnittsweise über die Außenkontur der Tragstruktur hervorragt, wobei der Speicher bewegbar an der Tragstruktur befestigt ist.

Wiederum bezieht sich die Draufsicht auf den bestimmungsgemäßen Gebrauch, bei welchen das erste Rad und das zweite Rad auf einer Unterlage abrollen. In der Draufsicht schaut man folglich entlang der bereits erwähnten Rotationsachse. Je nach Ausführungsform kann die Außenkontur rotationssymmetrisch zur Rotationsachse ausgebildet sein, so dass bei einem Drehen der fahrerlosen Transportvorrichtung um die Rotationsachse keine exzentrischen Abschnitte beispielsweise an die Wandungen der Hohlräume einer Palette anschlagen können. Der Speicher für elektrische Energie, welche beispielsweise zum Antreiben der Räder und zum Betreiben der Sensoreinheit benötigt wird, ragt abschnittsweise über die Außenkontur der Tragstruktur hervor, so dass der Speicher einen exzentrischen Abschnitt bildet. Hierdurch können der vom Speicher umschlossene Raum und seine Ladekapazität vergrößert werden. Allerdings besteht die Gefahr, dass der Speicher beim Drehen an benachbarte Gegenstände, beispielsweise die bereits erwähnten Wandungen der Hohlräume einer Palette, anschlägt. Allerdings ist der Speicher bewegbar an der Tragstruktur befestigt, so dass er dann, wenn er beispielsweise an die Wandungen der Hohlräume einer Palette anschlägt, die weitere Drehung der fahrerlosen Transportvorrichtung nicht beeinträchtigt. Folglich kann in dieser Ausführungsform die Ladekapazität des Speichers vergrößert werden, ohne dass die Manövrierbarkeit der fahrerlosen Transportvorrichtung eingeschränkt wird.

Bei einer weiteren Ausführungsform kann der Speicher um die Rotationsachse drehbar an der Tragstruktur befestigt sein. Insbesondere dann, wenn die Außenkontur der Tragstruktur rotationssymmetrisch zur Rotationsachse ausgebildet ist, bietet es sich an, auch den Speicher um die Rotationsachse drehbar an der Tragstruktur zu befestigen. Hierzu kann eine ringförmige Nut vorgesehen sein, in welche der Speicher mit einem entsprechend gestalteten Vorsprung formschlüssig eingreift. Insbesondere dann, wenn die fahrerlose Transportvorrichtung auf der Stelle gedreht werden soll und der Speicher an einen benachbarten Gegenstand anschlägt, wird die Drehung nicht behindert.

Nach Maßgabe einer weiteren Ausführungsform ist der Speicher lösbar an der Tragstruktur befestigt. Die lösbare Befestigung des Speichers an der Tragstruktur ermöglicht es, den Ladevorgang zu vereinfachen. Insbesondere kann ein leerer Speicher innerhalb von kurzer Zeit gegen einen vollen Speicher ausgetauscht werden. Der leere Speicher kann während der Zeit aufgeladen werden, in welcher der volle Speicher den Betrieb der fahrerlosen Transportvorrichtung sicher-stellt. Das Austauschen eines leeren Speichers gegen einen vollen Speicher kann automatisiert werden, so dass einerseits der Austausch rechtzeitig und andererseits mit nur einer geringen zeitlichen Unterbrechung des Betriebs und ohne die Mithilfe eines Benutzers erfolgen kann.

Eine Ausgestaltung der Erfindung betrifft ein fahrerloses Transportsystem, umfassend
- eine Mehrzahl von fahrerlosen Transportvorrichtungen nach einem der vorherigen Ausführungsformen,
- eine Kontrolleinheit zum Steuern oder Regeln der fahrerlosen Transportvorrichtungen, und
- eine Kommunikationseinrichtung, mit welcher Informationen zwischen der Kontrolleinheit und den fahrerlosen Transportvorrichtungen ausgetauscht werden können.

Das fahrerlose Transportsystem umfasst eine Mehrzahl von fahrerlosen Transportvorrichtungen, wobei die Anzahl beliebig gewählt werden kann. Die Mindestanzahl soll zwei betragen. Je nach zu transportierenden Gegenständen wird eine Anzahl von drei oder vier Transportvorrichtungen am geeignetsten sein. Das Transportsystem kann aber auch mehrere Untergruppen von beispielsweise jeweils vier Transportvorrichtungen umfassen, wobei die Anzahl der Transportvorrichtungen der Untergruppen nicht gleich sein muss.

Um Gegenstände mit einer Mehrzahl von fahrerlosen Transportvorrichtungen transportieren zu können, müssen diese koordiniert werden, wozu die Kontrolleinheit dient. Zudem müssen Informationen zwischen der Kontrolleinheit und den fahrerlosen Transportvorrichtungen ausgetauscht werden, um die Koordination umsetzen zu können, wozu die Kommunikationseinrichtung dient. Die Kommunikationseinrichtung kann ein drahtloses Netz, beispielsweise ein WLAN-Netz, ein Bluetooth-Netz oder dergleichen nutzen. Jede der Transporteinrichtungen und die Kontrolleinheit weisen hierzu eine Sender-Empfängereinheit auf. Diese Sender-Empfängereinheit kann auch nach Art einer Relaisstation genutzt werden und als Repeater betrieben werden, um die Stabilität des WLAN-Netzes aufrecht zu erhalten. Insbesondere dann, wenn sich einige der Transportvorrichtungen hinter Gütern befinden, kann das WLAN-Netz nicht ausreichend sein. Die Repeater-Funktion verstärkt das WLAN-Netz auch in Gegenden mit schwachem WLAN-Netz.

In der Kontrolleinheit können die Aufgaben definiert werden, welche das fahrerlose Transportsystem ausführen soll. Insbesondere können die Gegenstände identifiziert werden, welche transportiert werden sollen. Zudem können der aktuelle Standort und der Zielstandort der zu transportierenden Gegenstände definiert werden.
- Figur 1A: eine perspektivische Darstellung eines ersten Beispiels Transportvorrichtung zum Transportieren von Gegenständen,
- Figur 1B: eine prinzipielle und nicht maßstabsgerechte Draufsicht auf das in Figur 1A dargestellte Beispiel der Transportvorrichtung,
- Figur 2: eine perspektivische Darstellung eines zweiten Beispiels Transportvorrichtung,
- Figur 3A: eine isolierte und perspektivische Explosionsdarstellung einer Hubeinrichtung der Transportvorrichtung,
- Figur 3B: eine isolierte Darstellung einer Kraftmesseinrichtung nach einem ersten Beispiel die in die Hubeinrichtung integriert ist,
- Figur 3C: eine isolierte Darstellung einer Kraftmesseinrichtung nach einem zweiten Beispiel die in die Hubeinrichtung integriert ist,
- Figur 4: eine prinzipielle Darstellung eines Teils einer Tragstruktur der Transportvorrichtung nach einem dritten Beispiel an welcher ein Speicher für elektrische Energie bewegbar an der Tragstruktur befestigt ist,
- Figur 5: eine Draufsicht auf einen Gegenstand, welcher von einem Transportsystem transportiert wird,
- Figur 6A: eine Seitenansicht eines Ausführungsbeispiels der erfindungsgemäßen Transportvorrichtung, die eine Spreizeinrichtung aufweist,
- Figur 6B: eine Draufsicht auf das in Figur 6A dargestellte Ausführungsbeispiel der erfindungsgemäßen Transportvorrichtung,
- Figur 6C: eine Schnittdarstellung durch das Ausführungsbeispiel der Transportvorrichtung entlang der in Figur 6B definierten Schnittebene A-A,
- Figur 6D: eine Schnittdarstellung durch das Ausführungsbeispiel der Transportvorrichtung entlang der in Figur 6B definierten Schnittebene B-B,
- Figur 6E: eine vergrößerte Darstellung des in Figur 6D gekennzeichneten Ausschnitts Q,
- Figur 6F: eine isolierte Darstellung eines Stellelements einer Entkopplungseinheit,
- Figur 7A: eine perspektivische Darstellung eines zweiten Ausführungsbeispiels der erfindungsgemäßen Transportvorrichtung, die eine Spreizeinrichtung aufweist,
- Figur 7B: die Spreizeinrichtung der erfindungsgemäßen Transportvorrichtung nach dem zweiten Ausführungsbeispiels in einer isolierten Draufsicht, wobei sich die Spreizeinrichtung in einer ersten Stellung befindet,
- Figur 7C: die in Figur 7B dargestellte Spreizeinrichtung in einer zweiten Stellung anhand einer Unteransicht,
- Figur 8: eine Ladefläche, welche mit einer Mehrzahl von Gegenständen unter Verwendung eines Transportsystems beladen wird, und
- Figur 9: eine Werkhalle, in welcher ein Transportsystem eingesetzt wird.

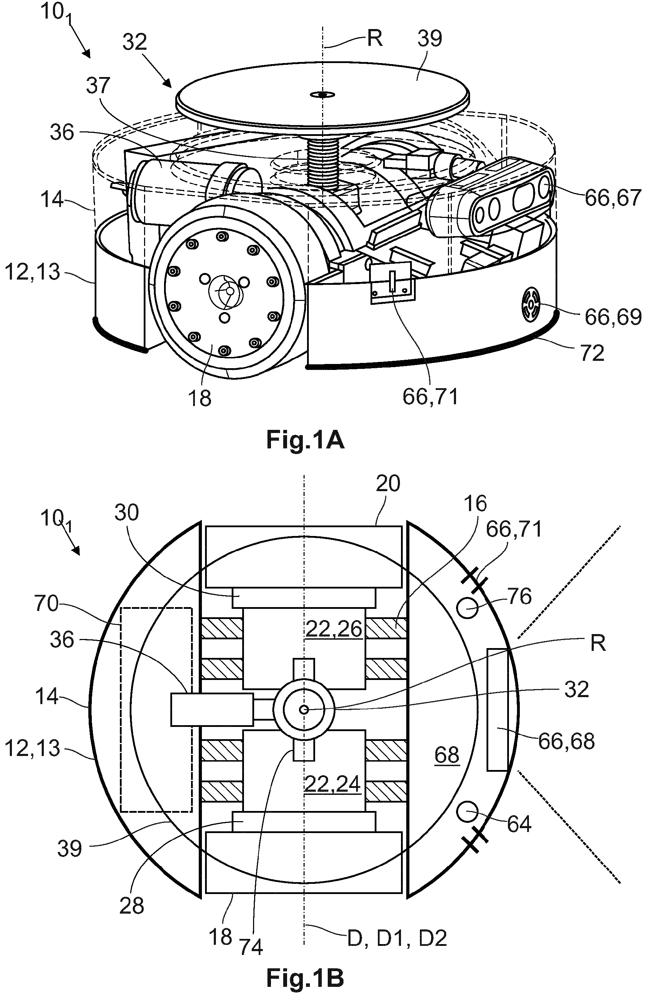

In der Figur 1A und 1B ist ein erstes Beispiel einer Transportvorrichtung 10₁ gezeigt. In der Figur 1A ist die Transportvorrichtung 10₁ anhand einer perspektivischen Darstellung gezeigt, während in der Figur 1B eine Draufsicht auf die in der Figur 1A gezeigte Transportvorrichtung 10₁ wiedergegeben ist, wobei die Figur 1B nicht maßstäblich und nur prinzipieller Natur ist.

Die Transportvorrichtung 10₁ weist eine Tragstruktur 12 auf, die im vorliegenden Ausführungsbeispiel von einem Gehäuse 13 gebildet wird, welches eine Außenkontur 14 aufweist. Die Außenkontur 14 bezeichnet dabei die äußeren Flächen und Kanten der Tragstruktur 12 oder des Gehäuses 13. An der Tragstruktur 12 ist ein Fahrwerk 16 befestigt, in welchem ein erstes Rad 18 und ein zweites Rad 20 um eine erste Drehachse D1 und eine zweite Drehachse D2 drehbar gelagert sind. Im dargestellten Ausführungsbeispiel fallen die erste Drehachse D1 und die zweite Drehachse D2 zusammen, so dass eine gemeinsame Drehachse D vorliegt.

Die Transportvorrichtung 10₁ umfasst weiterhin eine Antriebseinheit 22, welche ebenfalls an der Tragstruktur 12 befestigt ist. Die Antriebseinheit 22 weist in diesem Fall einen ersten Antriebsmotor 24 und einen zweiten Antriebsmotor 26 auf, wobei der erste Antriebsmotor 24 benachbart zum ersten Rad 18 und der zweite Antriebsmotor 26 benachbart zum zweiten Rad 20 angeordnet sind. Der erste Antriebsmotor 24 ist mit einem ersten Getriebe 28 mit dem ersten Rad 18 und der zweite Antriebsmotor 26 mit einem zweiten Getriebe 30 mit dem zweiten Rad 20 verbunden, so dass die von dem ersten Antriebsmotor 24 und von dem zweiten Antriebsmotor 26 bereitgestellte Drehbewegung direkt an das erste Rad 18 bzw. das zweite Rad 20 übertragen werden können. Der erste Antriebsmotor 24 kann unabhängig vom zweiten Antriebsmotor 26 betätigt werden, so dass das erste Rad 18 und das zweite Rad 20 auch in unterschiedliche Richtungen und mit unterschiedlichen Geschwindigkeiten angetrieben werden können, wodurch die Transportvorrichtung 10₁ gedreht werden kann.

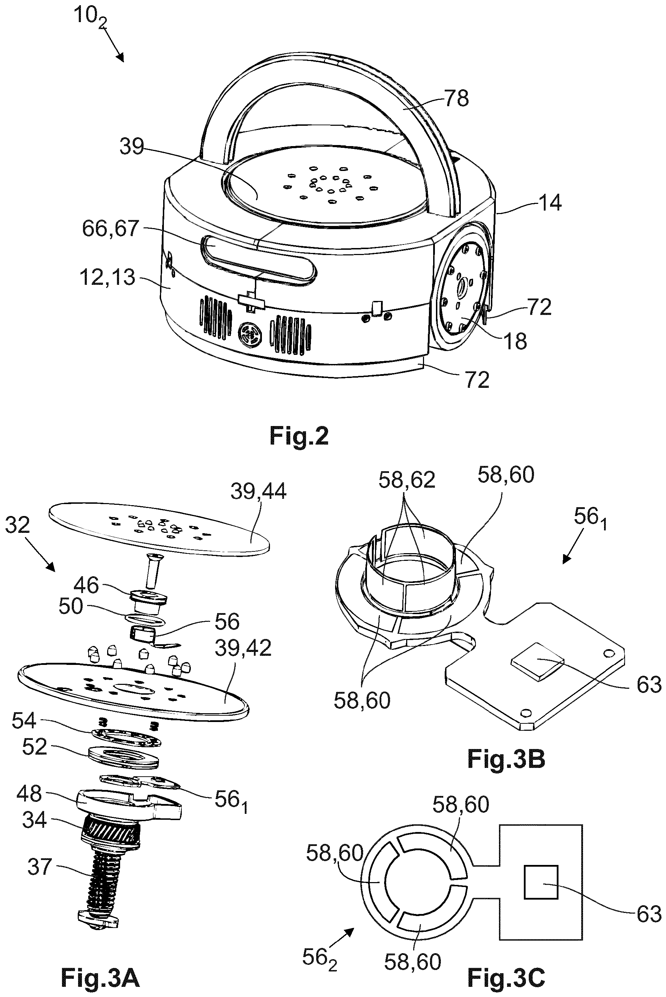

Darüber hinaus umfasst die Transportvorrichtung 10₁ eine Hubeinrichtung 32, welche in Figur 3A separat dargestellt ist.

Die Hubeinrichtung 32 ist mit einer Spindelmutter 34 versehen, die mittels eines dritten Antriebsmotors 36 um eine Rotationsachse R gedreht werden kann. Die Rotationsachse R verläuft senkrecht zu der gemeinsamen Drehachse D und im bestimmungsgemäßen Gebrauch vertikal. Die Spindelmutter 34 wirkt mit einer nicht rotierbaren Spindel 37 zusammen, die wiederum mit einem Tragabschnitt 39 verbunden ist, der im ersten Beispiel

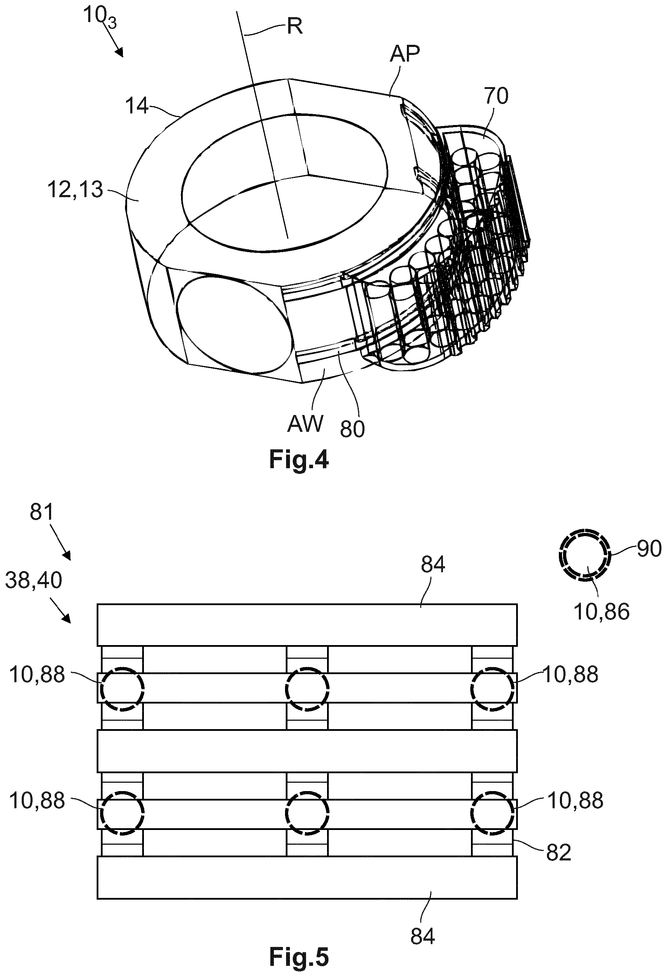

der Transportvorrichtung 10₁ nach Art eines Drehtellers ausgeführt ist, der gegenüber dem Gehäuse 13 drehbar ist. Wird die Spindelmutter 34 mittels des dritten Antriebsmotors 36 um die Rotationsachse R gedreht, so wird die Spindel 37 und der hiermit verbundene Tragabschnitt 39 entlang der Rotationsachse R bewegt. Bezogen auf den bestimmungsgemäßen Gebrauch der Transportvorrichtung 10₁, der dann vorliegt, wenn das erste Rad 18 und das zweite Rad 20 auf einer in den Figuren 1A und 1B nicht gezeigten Unterlage abrollen, wird der Tragabschnitt 39 je nach Drehrichtung des dritten Antriebsmotors 36 entweder angehoben oder abgesenkt. Zum Transportieren eines Gegenstands 38, beispielsweise einer Palette 40 (siehe Figur 5), wird die Transportvorrichtung 10₁ in einen Hohlraum der Palette 40 hineingefahren und anschließend die Hubeinrichtung 32 derart aktiviert, dass der Tragabschnitt 39 angehoben wird. Der Tragabschnitt 39 wird folglich in Kontakt mit der Palette 40 gebracht, die infolgedessen angehoben wird, so dass sie keinen Kontakt mehr mit der Unterlage aufweist. Anschließend kann die Palette 40 mit der Transportvorrichtung 10₁ an den gewünschten Ort gebracht werden.

Bezug nehmend auf die Figur 3A ist erkennbar, dass der Tragabschnitt 39 der Hubeinrichtung 32 einen Teller 42 und eine mit dem Teller 42 verbundene Noppenmatte 44 aufweist. Die Noppenmatte 44 kann beispielsweise mit dem Teller 42 verklebt sein. Der Teller 42 ist mittels einer Spannhülse 46 mit der Spindel 37 verbunden. Die Spannhülse 46 befestigt gleichzeitig auch ein zum Teller 42 hin offenes Tellergehäuse 48 mit der Spindel 37. Ein O-Ring 50 ist in eine umlaufende Nut der Spannhülse 46 eingebracht und dichtet die Spannhülse 46 gegenüber dem Teller 42 ab. Im Tellergehäuse 48 ist ein Axialrollenlager 52 angeordnet, so dass sich der Tragabschnitt 39 relativ zum Tellergehäuse 48 und der übrigen Transportvorrichtung 10₁ drehen kann. Zwischen dem Axialrollenlager 52 und dem Teller 42 ist ein Gummiring 54 angeordnet. Der Gummiring 54 lässt Kippbewegungen zwischen dem Teller 42 und dem Axialrollenlager 52 zu, welche von einer ungleichmäßigen Belastung des Tragabschnitts 39 hervorgerufen werden.

Darüber hinaus ist eine Kraftmesseinrichtung 56₁ nach einem ersten Beispiel im Tellergehäuse 48 angeordnet, welche in der Figur 3B separat dargestellt ist. Die Kraftmesseinrichtung 56₁ umfasst im ersten Beispiel insgesamt sechs kapazitive Kraftsensoren 58, die sich in eine erste Gruppe 60 und eine zweite Gruppe 62 mit jeweils drei Kraftsensoren 58 unterteilen lässt. Die Hauptflächen der Kraftsensoren 58 der ersten Gruppe 60 liegen bezogen auf den bestimmungsgemäßen Gebrauch der Transportvorrichtung 10₁ in einer horizontalen Ebene, während die Hauptflächen der Kraftsensoren 58 der zweiten Gruppe 62 senkrecht zu den Hauptflächen der Kraftsensoren 58 der ersten Gruppe 60 ausgerichtet sind. Die Kraftsensoren 58 der ersten Gruppe 60 sind kreisringsektorförmig ausgebildet, während die Kraftsensoren der zweiten Gruppe 62 zylindersektorförmig ausgebildet sind. Die Hauptflächen der Kraftsensoren 58 der zweiten Gruppe 62 liegen im bestimmungsgemäßen Gebrauch der Transportvorrichtung 10₁ in einer vertikalen Ebene. Anstelle der kapazitiven Kraftsensoren 58 können auch resistive Kraftsensoren, Dehnungsmessstreifen oder eine gedruckte Elektronik zum Einsatz kommen.

In Figur 3C ist ein zweites Beispiel der Kraftmesseinrichtung 56₂ dargestellt, welches sich von der Kraftmesseinrichtung 56₁ nach dem ersten Beispiel im Wesentlichen dadurch unterscheidet, dass sie nur drei kapazitive Kraftsensoren 58 aufweist, welche zur ersten Gruppe 60 zugeordnet werden können.

In beiden Fällen ist es möglich, horizontal wirkende Kräfte und vertikal wirkende Kräfte zu messen. Zudem können je nachdem, wie die Kraftsensoren 58 mechanisch gelagert sind, Kipp-, Dreh- und Schiebebewegungen gemessen werden.

Im ersten Beispiel der Kraftmesseinrichtung 56₁ dienen die Kraftsensoren 58 der ersten Gruppe 60 dazu, vertikal wirkende Kräfte zu bestimmen. Die Kraftsensoren 58 der zweiten Gruppe 62 werden zum Bestimmen von horizontal wirkenden Kräften verwendet. Aufgrund der Aufteilung der Kraftsensoren 58 in die erste Gruppe 60 und die zweite Gruppe 62 können die verschiedenen Lastfälle genauer voneinander unterschieden werden als es beim zweiten Beispiel der Kraftmesseinrichtung 56₂ der Fall ist. Da grundsätzlich die verschiedenen Lastfälle mit steigender Anzahl von Kraftsensoren 58 besser beschrieben werden können, ist man bestrebt, die Anzahl der Kraftsensoren 58 zu erhöhen. Allerdings wächst hierdurch der Platzbedarf. Die Anordnung der Kraftsensoren 58 der ersten Gruppe 60 senkrecht zu den Kraftsensoren 58 der zweiten Gruppe 62 steigert einerseits die Genauigkeit, mit welcher die Lastfälle beschrieben werden können, andererseits hält sich der hierfür notwendige Bauraum in vertretbaren Grenzen.

Die Kraftsensoren 58 wirken mit einer Auswerteeinheit 63 zusammen, so dass die Kräfte, welche auf den Tragabschnitt 39 wirken, ermittelt werden können. Zudem lässt sich mithilfe der Auswerteeinheit 63 ermitteln, wie die Kräfte über den Tragabschnitt 39 verteilt sind. Aufgrund der Freiheitsgrade, welche die Lagerung des Tragabschnitts 39 in der Hubeinrichtung 32 vorgibt, können bestimmte Lastfälle, beispielsweise ein Kippen, vorgegeben werden, die bestimmt werden sollen. Zudem hängen die Belastungen, die bestimmt werden können, von der Anordnung der Kraftsensoren 58 relativ zum Tragabschnitt 39 ab.

Die Information der Größe und Verteilung der auf den Tragabschnitt 39 wirkenden Kräfte kann auf verschiedene Weise genutzt werden, worauf später ausführlicher eingegangen wird. An dieser Stelle soll nur darauf verwiesen werden, dass ein Überladen der Transportvorrichtung 10₁ verhindert werden kann. Wenn die auf den Tragabschnitt 39 wirkende Kraft ein bestimmtes Maß überschreitet, kann das Anheben des Tragabschnitts 39 unterbrochen und mittels eines Signalgebers 64 (siehe Figur 1B) ein entsprechendes Hinweissignal ausgegeben werden. Das Hinweissignal kann beispielsweise in optischer und/oder akustischer Form ausgegeben werden.

Bezug nehmend auf die Figuren 1A und 1B weist die Transportvorrichtung 10₁ eine Sensoreinheit 66 auf, mit welcher das Umfeld der Transportvorrichtung 10₁ erfasst werden kann. Insbesondere können Hindernisse und Beschaffenheit der Unterlage, auf welcher die Räder abrollen, ermittelt werden. Die Sensoreinheit 66 kann Kameras 67, Ultraschallsensoren 69, laserbasierte Sensoren 71 oder radarbasierte Sensoren oder dergleichen umfassen, mit denen das Umfeld auch unter unterschiedlichen Bedingungen mit einer ausreichenden Genauigkeit erfasst werden kann. Die Sensoreinheit 66 ist in einem Sensorabschnitt 68 angeordnet, welcher von der Außenkontur 14 und von der gemeinsamen Drehachse D oder einer durch die gemeinsame Drehachse D und die Rotationsachse R verlaufende Ebene begrenzt wird. Dieser Definition zufolge weist die Transportvorrichtung 10₁ zwei derartiger Sensorabschnitte 68 auf, allerdings ist die Sensoreinheit 66 nur in einem dieser Sensorabschnitte 68 angeordnet. Diese Anordnung hat zur Folge, dass die Sensoreinheit 66 nur den Teil des Umfelds erfassen kann, welche auf der Seite der gemeinsamen Drehachse D oder der durch sie verlaufende Ebene angeordnet ist, auf welcher die Sensoreinheit 66 angeordnet ist.

Zudem ist die Transportvorrichtung 10₁ mit einem Speicher 70 für elektrische Energie ausgerüstet, damit die betreffenden Komponenten mit elektrischer Energie versorgt werden können.

Wie insbesondere aus der Figur 1B zu erkennen ist, ist die Außenkontur 14 zumindest abschnittsweise rotationssymmetrisch zur Rotationsachse R. Darüber hinaus sind insbesondere der Tragabschnitt 39 und das erste Rad 18 und das zweite Rad 20 innerhalb der Außenkontur 14 angeordnet. Es ragen daher keine Komponenten radial über die Außenkontur 14 heraus. Hieraus ergibt sich der Effekt, dass dann, wenn die Transportvorrichtung 10₁ auf der Stelle gedreht wird, was durch ein entsprechendes Ansteuern des ersten Rads 18 und des zweiten Rads 20 erfolgen kann, keine exzentrischen Abschnitte vorhanden sind, welche an benachbarte Gegenstände anstoßen und die Drehung beeinträchtigen könnten, solange sich die benachbarten Gegenstände in einem Abstand befinden, welcher mindestens dem Radius der Außenkontur 14 um die Rotationsachse R entspricht.

Aus Figur 1A ist erkennbar, dass am unteren Rand des Gehäuses 13 ein Borstenabschnitt 72 angeordnet ist, welcher aus einer Vielzahl von hier nicht explizit erkennbaren Borsten besteht. Wie erwähnt, sind das erste Rad 18 und das zweite Rad 20 auf einer gemeinsamen Drehachse D angeordnet. Folglich kann die Transportvorrichtung 10₁ um die gemeinsame Drehachse D kippen, so dass das Gehäuse 13 auf einer Seite der gemeinsamen Drehachse D auf der Unterlage aufliegt und dann, wenn die Transportvorrichtung 10₁ bewegt wird, auf der Unterlage entlang schleift. Dieses Schleifen wird mit dem Borstenabschnitt 72 verhindert, der zudem einen stabilisierenden Einfluss auf die Transportvorrichtung 10₁ hat. Weiterhin hat der Borstenabschnitt 72 den Effekt eines Besens, so dass zumindest kleinere Partikel entfernt werden und das Abrollen der Räder 18, 20 auf der Unterlage nicht negativ beeinflussen können.

Um die Transportvorrichtung 10₁ um die gemeinsame Drehachse D zu stabilisieren, kann alternativ auch ein oder mehrere Stützräder (nicht gezeigt) eingesetzt werden.

Im dargestellten Beispiel ist die Transportvorrichtung 10₁ weiterhin mit einer Selbststabilisierungseinrichtung 74 ausgerüstet (Figur 1B), welche die Neigung und die Änderung der Neigung der Transportvorrichtung 10₁ um die gemeinsame Drehachse D ermitteln und dieser entgegenwirken kann. Beispielsweise kann die Selbststabilisierungseinrichtung 74 ein Gyroskop oder einen Neigungssensor aufweisen. Stellt die Selbststabilisierungseinrichtung 74 fest, dass die Neigung um die gemeinsame Drehachse D ein kritisches Maß überschreitet, kann die Selbststabilisierungseinrichtung 74 Gegenmaßnahmen einleiten. Die Gegenmaßnahmen können beispielsweise in einem gezielten Beschleunigen oder Abbremsen des ersten Rads 18 und/oder des zweiten Rads 20 bestehen. Alternativ kann eine hier nicht dargestellte Ausgleichswelle angetrieben oder hier ebenfalls nicht dargestellte Gewichte verschoben werden. Sämtliche Maßnahmen dienen dazu, ein der Neigung entgegenwirkendes Drehmoment um die Drehachse D innerhalb der Transportvorrichtung 10₁ zu erzeugen, um die Neigung wieder auf Werte unterhalb des kritischen Maßes zu senken. Anzumerken ist, dass die Selbststabilisierungseinrichtung 74 nur dann eingesetzt werden kann, wenn keine Gegenstände mit der Transportvorrichtung 10₁ transportiert werden.

Darüber hinaus ist die Transportvorrichtung 10₁ mit einer Kommunikationseinrichtung 76 ausgestattet, mit welcher die Transportvorrichtung 10₁ Informationen mit anderen Kommunikationspartnern austauschen kann, auf welche später noch genauer eingegangen wird.

In Figur 2 ist eine perspektivische Darstellung eines zweiten Beispiels der Transportvorrichtung 10₂ gezeigt. Die Transportvorrichtung 10₂ nach dem zweiten Beispiel ist in weiten Teilen genauso aufgebaut wie die Transportvorrichtung 10₁ nach dem ersten Beispiel. Zusätzlich weist die Transportvorrichtung 10₂ einen Tragegriff 78 auf, welche drehbar an der Tragstruktur 12 befestigt ist. Die Transportvorrichtung 10₁ kann folglich nach Art eines Eimers am Tragegriff 78 ergriffen und transportiert werden.

In Figur 4 ist ein Teil einer Tragstruktur 12 der Transportvorrichtung 10₃ nach einem dritten Beispiel anhand einer prinzipiellen und perspektivischen Darstellung wiedergegeben, wobei die Tragstruktur 12 als ein Gehäuse 13 ausgebildet ist. An einer der beiden gewölbten Außenflächen AW des Gehäuses 13 sind zwei kreisringsektorförmige Nuten 80 angeordnet, in welche ein Speicher 70 für elektrische Energie formschlüssig eingreifen und lösbar mit dem Gehäuse 13 verbunden werden kann. Der Speicher 70 ist in diesem Ausführungsbeispiel daher nach Art eines Rucksacks außerhalb vom Gehäuse 13 angeordnet und bildet einen exzentrischen Abschnitt. Der Speicher 70 kann innerhalb der beiden Nuten 80 bewegt werden, wobei er sich um die Rotationsachse R dreht. Die Transportvorrichtung 10₁ kann daher innerhalb von gewissen Grenzen auf der Stelle in Räumen bewegt werden, welche nur unwesentlich breiter sind als das Gehäuse 13 an den beiden planen Außenflächen AP. Derartige Räume können die Hohlräume von Paletten 40 sein. Beim Drehen stößt der Speicher 70 an die Wände der Palette 40 an und wird aufgrund der Drehbewegung der Transportvorrichtung 10₁ entlang der Nuten 80 um die Rotationsachse R der Transportvorrichtung 10₁ gedreht. Der Speicher 70 behindert die weitere Drehung der Transportvorrichtung 10₁ nicht.

In der Figur 5 ist eine Draufsicht auf einen Gegenstand 38 gezeigt, welcher mit einem Transportsystem 81 transportiert werden kann. In der Figur 5 ist der Gegenstand 38 als eine Palette 40 ausgeführt, auf welcher nicht näher gezeigte Gegenstände wie Kisten oder dergleichen abgelegt sein können. Die dargestellte Palette 40 weist drei Querhölzer 82 auf, auf welche insgesamt fünf Bretter 84 aufgenagelt sind. In jedem Querholz 82 sind zwei in Figur 5 nicht erkennbare Aussparungen angeordnet, die jeweils mit den Aussparungen der benachbarten Querhölzer 82 fluchtend angeordnet sind.

Das Transportsystem 81 umfasst insgesamt sieben Transportvorrichtungen 10, welche in den Figuren 1A und 1B beschrieben sind und in der Figur 5 nur prinzipiell dargestellt sind. Sechs der Transportvorrichtungen 10 werden in jeweils eine der Aussparungen der Querhölzer 82 hineingefahren. Anschließend wird die Hubeinrichtung 32 angehoben, so dass die Palette 40 von der Unterlage entfernt und anschließend an den gewünschten Ort transportiert werden kann. Wie aus der Figur 5 ebenfalls erkennbar, ist eine siebte Transportvorrichtung 10₁ nicht in die Aussparungen der Palette 40 eingebracht. Die siebte Transportvorrichtung 10₁ ist als ein sogenannter Master 86 konfiguriert, während die übrigen sechs Transportvorrichtungen 10 als Slaves 88 ausgestaltet sind. Der Master 86 dient insbesondere zur Erfassung des Umfelds, da er außerhalb der Palette 40 positioniert ist und daher im Gegensatz zu den Slaves 88 das Umfeld besser erkennen kann. Unter Verwendung der Kommunikationseinrichtung 76 kann der Master 86 Befehle an die Slaves 88 übermitteln, insbesondere auf Hindernisse bezogen.

Der Master 86 begleitet die Slaves 88 so lange, bis die Palette 40 an den gewünschten Ort transportiert worden ist. Dann wird die Hubeinrichtung 32 entsprechend aktiviert, so dass die Palette 40 wieder auf der Unterlage abgelegt wird. Anschließend fahren die Slaves 88 aus der Palette 40 heraus und können zum Transportieren eines weiteren Gegenstandes verwendet werden. Die sieben Transportvorrichtungen 10 können baugleich sein. Es ist aber auch möglich, den Master 86 mit einer besonders leistungsstarken Master-Sensoreinheit 90 zu versehen, damit das Umfeld besonders großflächig erfasst werden kann.

Für den Fall, dass die Transportvorrichtungen 10 baugleich ausgeführt sind, kann jede der Transportvorrichtungen 10 als ein Master 86 oder ein Slave 88 definiert werden. Die Transportvorrichtungen 10 können also unterschiedlich eingesetzt werden. Wie erwähnt, dient der Master 86 dazu, das Umfeld der Palette 40 möglichst umfangreich zu erfassen. Hierzu benötigt die Sensoreinheit 66 überdurchschnittlich viel elektrische Energie. Aufgrund der Möglichkeit, auch eine der übrigen Transportvorrichtungen 10 als Master 86 einzusetzen, wird verhindert, dass der Speicher 70 einer Transportvorrichtung 10₁ schneller entleert wird als diejenigen der übrigen Transportvorrichtungen 10. Auch werden alle Transportvorrichtungen 10 gleichmäßig belastet, wodurch verhindert wird, dass eine oder mehrere der Transportvorrichtungen 10 schneller verschleißen und eher gewartet werden müssen als andere. Zum Transportieren des weiteren Gegenstands 38 kann eine andere der Transportvorrichtungen 10 als Master 86 eingesetzt werden.

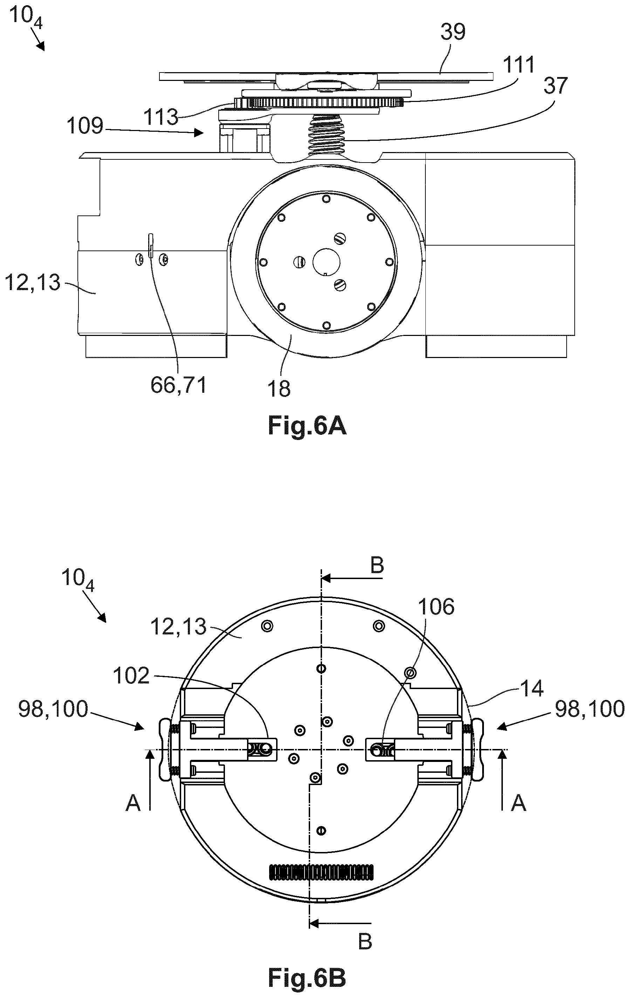

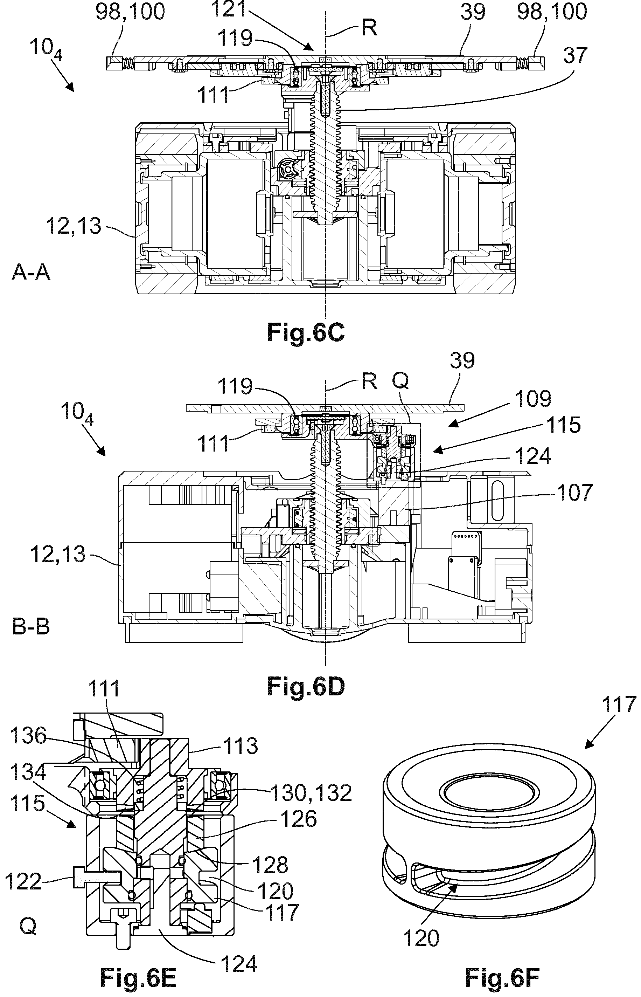

In der Figur 6A ist ein erstes Ausführungsbeispiel der vorschlagsgemäßen Transportvorrichtung 10₄ anhand einer Seitenansicht und in Figur 6B anhand einer Draufsicht gezeigt. Figuren 6C bis 6E zeigen Schnittdarstellungen erstes Ausführungsbeispiel der vorschlagsgemäßen Transportvorrichtung 10₄. Der grundsätzliche Aufbau der Transportvorrichtung 10₄ nach dem ersten Ausführungsbeispiel entspricht weitgehend demjenigen der zuvor beschriebenen Beispiele, so dass im Folgenden nur auf die Unterschiede eingegangen wird.

Die Transportvorrichtung 10₄ nach dem ersten Ausführungsbeispiel umfasst eine Spreizeinrichtung 98, welche im ersten Ausführungsbeispiel der Transportvorrichtung 10₄ zwei Spreizarme 100 umfasst, die mittels einer Verstelleinheit 106 zwischen einer ersten Stellung und einer zweiten Stellung verstellbar sind. In Figur 6B sind die beiden Spreizarme 100 in einer zweiten Stellung dargestellt, in welcher die Spreizarme 100 über die Außenkontur 14 der Tragstruktur 12 herausragen. In der nicht dargestellten ersten Stellung befinden sich die Spreizarme 100 innerhalb der Außenkontur 14, so dass keine exzentrischen Abschnitte vorliegen, die beim Drehen der Transporteinrichtung 10₄ auf der Stelle gegen benachbart angeordnete Gegenstände 38 anstoßen und daher die Drehung behindern könnten. Die Spreizarme 100 sind in Führungsbahnen 102 verschiebbar gelagert, wobei die Führungsbahnen 102 von im Tragabschnitt 39 angeordneten Nuten gebildet werden. Die Führungsbahnen 102 verlaufen ausgehend vom Zentrum der Transportvorrichtung 10₄ radial nach außen, so dass die Spreizarme 100 in einer radialen Richtung bewegt werden können.

Zum Bewegen der Spreizarme 100 zwischen der ersten und der zweiten Stellung umfasst die Spreizeinrichtung 98 neben der Verstelleinheit 106 eine weitere Antriebseinheit 107, welche im Folgenden insbesondere unter Bezugnahme auf die Figuren 6C bis 6E näher beschrieben werden. Die Verstelleinheit 106 und die weitere Antriebseinheit 107 wirken unter Verwendung eines Antriebsstrangs 109 zusammen. Der Antriebsstrang 109 verläuft exzentrisch zur Drehachse R und umfasst ein erstes Zahnrad 111 und ein zweites Zahnrad 113, die in kämmendem Eingriff miteinander stehen, was insbesondere aus Figur 6A hervorgeht. Das erste Zahnrad 111 ist drehfest mit dem Tragabschnitt 39 verbunden. Hierdurch kann die Drehbewegung der weiteren Antriebseinheit 107 auf die Verstelleinheit 106 übertragen werden. Mit der Drehbewegung können die Spreizarme 100 zwischen der ersten Stellung und der zweiten Stellung bewegt werden. Auf die hierzu verwendeten Mechanismen wird später genauer eingegangen.

Wie zuvor erwähnt, ist die Spindel 37 drehfest in der Tragstruktur 12 gelagert. Um den Tragabschnitt 39 und folglich auch die Spreizeinrichtung 98 relativ zum Gehäuse 13 bewegen zu können, ist eine entsprechende Lagereinheit 119 vorgesehen. Um die Drehstellung der Spreizeinrichtung 98 beispielsweise in Bezug auf die erste Drehachse D1 und/oder die zweite Drehachse D2 bestimmen zu können, ist ein Winkelsensor 121 vorgesehen.

Im Antriebsstrang 109 ist eine Entkopplungseinheit 115 angeordnet, mit welcher der Antriebsstrang 109 wahlweise geöffnet und geschlossen werden kann. Die Entkopplungseinheit 115 hat folgenden Zweck: Die Spreizarme 100 dienen dazu, die Transportvorrichtung 104 in der zweiten Stellung mit dem zu transportierenden Gegenstand 38, insbesondere mit einer Palette 40 (siehe Figur 5), zu verspannen, um ein unkontrolliertes Verrutschen zu verhindern. Ein Drehen der Transportvorrichtung 10₄ im verspannten Zustand, insbesondere zum Lenken, wäre dann aber nicht ohne weiteres möglich, da sonst die im Antriebsstrang 109 und in der weiteren Antriebseinheit 107 vorliegenden Widerstände überwunden werden müssten.

Die Entkopplungseinheit 115 umfasst eine Kurvenscheibe 117, welche in Figur 6F separat dargestellt ist. Die Kurvenscheibe 117 ist drehfest, aber axial verschiebbar mit einer Abtriebswelle 124 der weiteren Antriebseinheit 107 verbunden. Die Kurvenscheibe 117 weist in der Mantelfläche eine Nut 120 mit einem wendelförmigen Verlauf und einer bestimmten Steigung auf. Ein in der Tragstruktur 12 verankerter Pin 122 ragt in die Nut 120 ein (Figur 6E). Wird die Kurvenscheibe 117 von der Abtriebswelle 124 gedreht, führt sie neben der rotatorischen Bewegung auch eine translatorische Bewegung parallel zur Rotationsachse R aus. Die translatorische Bewegung der Kurvenscheibe 117 wird auf ein Kupplungselement 126 übertragen, welches ringförmig ausgebildet ist. Das Kupplungselement 126 tritt hierzu über eine erste Stirnfläche 128 mit der Kurvenscheibe 117 in Kontakt. Auf einer zweiten Stirnfläche 130 weist das Kupplungselement 126 eine erste Stirnverzahnung 132 auf, die je nach Position in eine korrespondierende zweite Stirnverzahnung 134 des zweiten Zahnrads 113 eingreifen kann. Im in Figur 6E dargestellten Betriebszustand stehen die erste Stirnverzahnung 132 und die zweite Stirnverzahnung 134 nicht in Eingriff. Stehen die erste Stirnverzahnung 132 und die zweite Stirnverzahnung 134 in Eingriff, so wird die Drehbewegung der Abtriebswelle 124 der weiteren Antriebseinheit 107 auf das erste Zahnrad 111 übertragen, wodurch die Spreizarme 100 bewegt werden. Je nach Drehrichtung der Abtriebswelle 124 wird das Kupplungselement 126 von der Kurvenscheibe 117 zum zweiten Zahnrad 113 hin oder von diesem weg bewegt. Entsprechend können die erste Stirnverzahnung 132 und die zweite Stirnverzahnung 134 in oder außer Eingriff gebracht werden. Um den Kontakt zwischen der Kurvenscheibe 117 und dem Kupplungselement 126 zu gewährleisten, wirkt das Kupplungselement 126 mit einer Rückstellfeder 136 zusammen.

Werden beispielsweise die Spreizarme 100 von der zweiten Stellung in die erste Stellung bewegt, die weitere Antriebseinheit 107 nach Erreichen der ersten Stellung weiter in diese Richtung gedreht, wird hierdurch eine Drehung des Tragabschnitts 39 bewirkt. Auf diese Weise können die Spreizeinrichtung 98 und folglich die Spreizarme 100 gegenüber der Tragstruktur 12 oder dem Gehäuse 13 in eine beliebige Drehstellung gebracht werden. Die Drehstellung kann mit dem Winkelsensor 121 ermittelt werden. Analog gilt dies, wenn die Spreizarme die zweite Stellung erreicht haben.

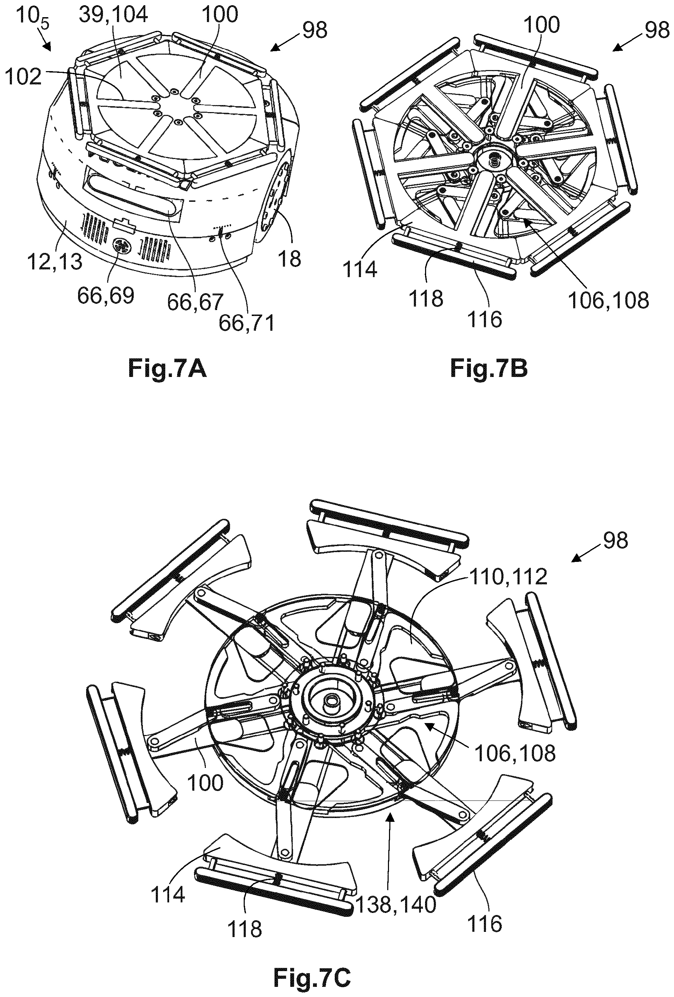

In den Figuren 7A ist ein zweites Ausführungsbeispiel der erfindungsgemäßen Transportvorrichtung 10₅ anhand einer perspektivischen Darstellung gezeigt. Der Aufbau der Transportvorrichtung 10₅ nach dem zweiten Ausführungsbeispiel gleicht weitgehend demjenigen des ersten Ausführungsbeispiels der Transportvorrichtung 10₄, insbesondere, was den Aufbau des Antriebsstrangs 109 und der Verstelleinheit 106 betrifft.

Die Spreizeinrichtung 98 umfasst insgesamt sechs Spreizarme 100, welche sich in der Figur 7B in einer ersten Stellung und in der Figur 7C in einer zweiten Stellung befindet. Auch in der Figur 7A befinden sich die Spreizarme 100 in der ersten Stellung. Man erkennt, dass die Spreizarme 100 nicht über die Außenkontur 14 der Tragstruktur 12 herausragen, wenn sich die Spreizarme 100 in der ersten Stellung befinden. Wie auch im ersten Ausführungsbeispiel der Transportvorrichtung 10₄ sind die Spreizarme 100 in den Führungsbahnen 102 verschiebbar gelagert, wobei die Führungsbahnen 102 von im Tragabschnitt 39 angeordneten Nuten verlaufen, so dass der Tragabschnitt 39 eine entsprechende Anzahl von Kreissektorelementen 104 bildet (siehe Figur 7A). Aus Darstellungsgründen sind die Kreissektorelemente 104 in Figur 7C nicht dargestellt.

Die Führungsbahnen 102 verlaufen ausgehend vom Zentrum der Transportvorrichtung 10₄ radial nach außen, so dass sich die Spreizarme 100 ebenfalls in einer radialen Richtung bewegen können, wie auch aus einem Vergleich der Figuren 7B und Figur 7C hervorgeht. Die Verstelleinheit 106 umfasst pro Spreizarm 100 jeweils eine Kniehebeleinheit 108, die durch Drehen einer Synchronisierungseinheit 110, welche im dargestellten Ausführungsbeispiel eine Kulissenscheibe 112 umfasst, gestreckt oder gestaucht werden können. Durch Strecken der Kniehebeleinheit 108 werden die Spreizarme 100 radial nach außen in die zweite Stellung und durch Stauchen der Kniehebeleinheit 108 in die erste Stellung bewegt. Da die Kulissenscheibe 112 mit allen Kniehebeleinheiten 108 auf dieselbe Weise zusammenwirkt, werden alle Spreizarme 100 gleichzeitig bewegt, wenn die Kulissenscheibe 112 gedreht wird.

Die Spreizeinrichtung 98 umfasst eine Sperreinrichtung 138, mit welcher die Verstelleinheit 106 zumindest dann gesperrt werden kann, wenn sich die Spreizarme 100 in der zweiten Stellung befinden. Im zweiten Ausführungsbeispiel der Transportvorrichtung ist die Sperreinrichtung 138 auf folgende Weise realisiert: Die Kulissenscheibe 112 wirkt so mit den Kniehebeleinheiten 108 zusammen, dass die beiden Schenkel der Kniehebeleinheiten 108 in der zweiten Stellung über einen Winkel von 180° hinaus bewegt und folglich überdrückt werden und in der zweiten Stellung an einem Anschlag 140 anliegen. Hierdurch werden die Spreizarme 100 in der zweiten Stellung gesperrt, ohne dass eine Sperrkraft aufgebracht werden muss. Hierdurch ist es möglich, die Spreizarme 100 auch dann in der zweiten Stellung zu halten, wenn der Antriebsstrang 109 geöffnet ist. Insofern wird die Sperreinrichtung 138 weitgehend von der Verstelleinheit 106 selbst gebildet, so dass keine zusätzlichen Elemente hierzu vorgesehen werden müssen. Alternativ kann aber die Sperreinrichtung 138 einen oder mehrere bewegbare Bolzen oder dergleichen umfassen, mit denen die Verstelleinheit 138 gesperrt werden kann.

Darüber hinaus ist an jedem radial äußeren Ende der Spreizarme 100 jeweils ein Anschlagelement 114 mit diesen verbunden. Wie insbesondere aus den Figuren 7A und 7B hervorgeht, schlagen die Anschlagelemente 114 in der ersten Stellung einerseits an den beiden jeweils benachbarten Anschlagelementen 114 an. Darüber hinaus schlagen die Anschlagelemente 114 auch an die Kreissektorelemente 104 an. Hierdurch wird die erste Stellung der Spreizarme 100 eindeutig festgelegt.

An den Anschlagelementen 114 ist jeweils ein Abstützelement 116 bewegbar befestigt, wobei die Abstützelemente 116 mittels einer Feder 118 vorgespannt werden.

Wie insbesondere in Figur 5 dargestellt, kann eine Palette 40 beispielsweise mit insgesamt sechs Transportvorrichtungen 10 transportiert werden. Werden Transportvorrichtungen 10₄, 10₅ nach dem ersten oder zweiten Ausführungsbeispiel verwendet, werden diese soweit in einen Hohlraum der Palette 40 hineingefahren, bis sie sich im Bereich des bereits erwähnten Querholz 82 befinden. Die Spreizeinrichtung 98 befindet sich hierbei in der ersten Stellung.

Hat die Transportvorrichtung 10₄, 10₅ die gewünschte Stellung innerhalb des Hohlraums erreicht, wird zunächst die Hubeinrichtung aktiviert, wodurch die Palette 40 angehoben wird. Anschließend wird die Spreizeinrichtung 98 aktiviert, so dass die Spreizarme 100 von der ersten Stellung in die zweite Stellung verstellt werden. Hierbei kommen die Abstützelemente 116 mit den Seitenwänden des Hohlraums der Palette 40 in Kontakt, wodurch die Transportvorrichtung 10₄, 10₅ reibschlüssig mit der Palette 40 verbunden wird. Hierbei werden die Federn 118 komprimiert, so dass stoßartige Belastungen vermieden werden. Darüber hinaus können die Abstützelemente 116 schwimmend gelagert sein, so dass Fertigungsungenauigkeiten zusammen mit den Federn 118 ausgeglichen werden können. Infolgedessen wird die Transportvorrichtung 10₄, 10₅ gegenüber der Palette 40 definiert ausgerichtet. Folglich kann sich die Palette 40 nicht mehr gegenüber der Transportvorrichtung 10₄, 10₅ verschieben. Nun kann die Palette 40 mittels der Transportvorrichtung 10₅ zum gewünschten Ziel bewegt werden.

Wie erwähnt, unterscheidet sich die Transportvorrichtung 10₅ nach dem zweiten Ausführungsbeispiel insbesondere in der Anzahl der Spreizarme 100 von der Transportvorrichtung 10₄ nach dem ersten Ausführungsbeispiel. Aufgrund der höheren Anzahl der Spreizarme 100 kann auf den Einsatz des Winkelsensors 121 verzichtet werden, da sich die Spreizeinrichtung 98 selbst so ausrichten kann, dass die Spreizarme 100 weitgehend parallel zu der Fläche des Gegenstands 38 verlaufen, mit welchem die Transportvorrichtung 10₄ verspannt werden soll.

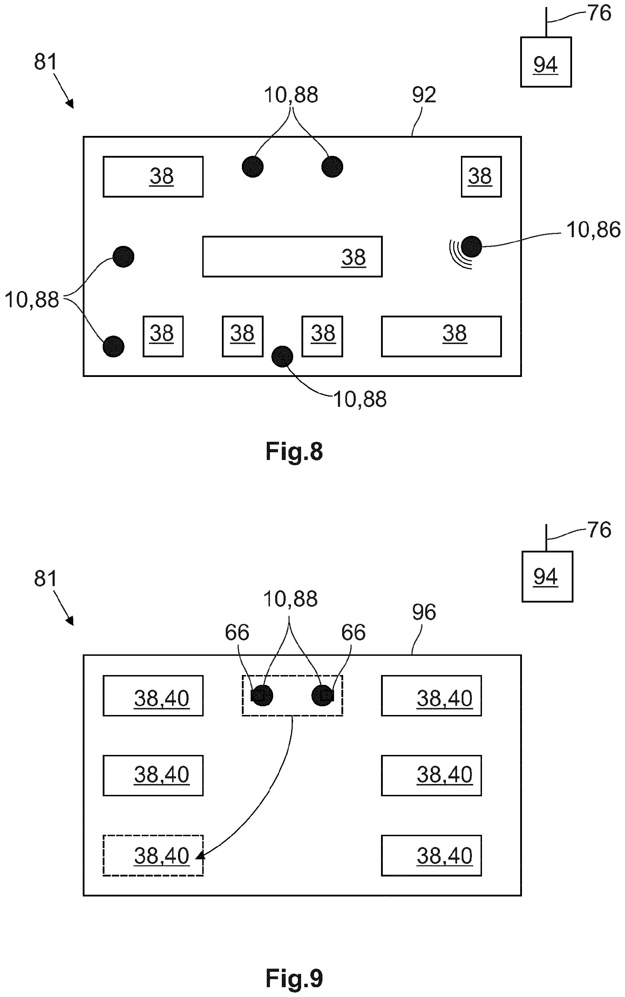

In der Figur 8 ist ein Transportsystem 81 dargestellt, welches insgesamt sechs Transportvorrichtungen 10 aufweist, welche innerhalb einer Werkhalle 92 verteilt angeordnet sind. In der Werkhalle 92 sind verschiedene Gegenstände gelagert, die mit dem Transportsystem 81 transportiert werden sollen. Das Transportsystem 81 umfasst eine Kontrolleinheit 94, mit welcher die Transportvorrichtungen 10 gesteuert oder geregelt werden können. Wie bereits erwähnt, sind die Transportvorrichtungen 10 mit Kommunikationseinrichtungen 76 ausgestattet (siehe Figur 1B), welche den Austausch von Informationen untereinander ermöglichen. Auch die Kontrolleinheit 94 ist mit einer derartigen Kommunikationseinrichtung 76 ausgestattet, so dass die Transportvorrichtungen 10 nicht nur untereinander Informationen austauschen können, sondern auch ein Informationsaustausch zwischen den Transportvorrichtungen 10 und der Kontrolleinheit 94 möglich ist. Die Kontrolleinheit 94 kann beispielsweise Aufgaben definieren, welche die Transportvorrichtungen 10 ausführen sollen, welche beispielsweise darin bestehen können, die verschiedenen Gegenstände 38 von einem Standort zum Zielstandort zu transportieren. Wie erwähnt, befinden sich die Transportvorrichtungen 10 innerhalb einer Werkhalle 92. Die Kontrolleinheit 94 kann außerhalb der Werkhalle 92 angeordnet sein, allerdings ist auch eine Anordnung innerhalb der Werkhalle 92 möglich. Zum Informationsaustausch verwendet die Kommunikationseinrichtung 76 ein drahtloses Netzwerk, beispielsweise ein WLAN oder Bluetooth. Je nach Ausgestaltung und Größe der Gegenstände ist aber nicht immer gewährleistet, dass das WLAN innerhalb der gesamten Werkhalle 92 in ausreichendem Umfang verfügbar ist. Die Funktionsfähigkeit des Transportsystems hängt aber von einem ausreichend verfügbaren WLAN ab. Um das WLAN-Netz zu stabilisieren, können einige oder alle Transportvorrichtungen 10 nach Art eines Repeaters oder einer Relaisstation betrieben werden, so dass gewährleistet ist, dass das WLAN auch in den Ecken der Werkhalle 92 oder hinter oder unter den Gegenständen verfügbar ist. Wie in Verbindung mit der Figur 5 beschrieben, können eine oder mehrere der Transportvorrichtungen 10 als ein Master 86 betrieben werden. Wie ebenfalls erwähnt, dient der Master 86 primär dazu, das Umfeld um den zu transportierenden Gegenstand 38 zu erfassen, allerdings kann der Master 86 auch so positioniert werden, dass das WLAN-Netzwerk zumindest für die ihm zugeordneten Slaves 88 verfügbar ist.

In der Figur 9 ist eine Ladefläche 96, beispielsweise die eines LKWs dargestellt, welche mit dem erfindungsgemäßen Transportsystem 81 beladen wird. Aufgrund der Tatsache, dass mittels der Kraftmesseinrichtung 56 die auf den Tragabschnitt 39 zumindest einer Transportvorrichtung 10 nach einem der zuvor beschriebenen Ausführungsbeispielen wirkende Kraft ermittelt werden kann, kann diese Information auch dazu genutzt werden, die Ladefläche 96 des LKWs möglichst gleichmäßig zu beladen. Im in Figur 9 dargestellten Beispiel soll die Ladefläche 96 mit insgesamt sechs Paletten 40 beladen werden, welche dasselbe Gewicht aufweisen sollen, wovon das Transportsystem 81 zunächst einmal aber nicht ausgehen kann. Als Erstes stellt das Transportsystem 81 insgesamt drei Paletten 40 in eine erste Reihe nebeneinander ab und registriert jeweils die genauen Positionen und das Gewicht der betreffenden Paletten 40 auf der Ladefläche 96. Anschließend transportiert die Transportvorrichtung 10₁ eine vierte Palette 40 in eine zweite Reihe und zum Schluss eine fünfte und eine sechste Palette 40 in eine dritte Reihe. Nachdem auch die sechste und letzte Palette 40 auf die Ladefläche 96 transportiert worden ist, erhält das Transportsystem 81 die Information, dass keine weiteren Paletten 40 auf die Ladefläche 96 beladen werden sollen. Das Transportsystem 81 stellt fest, dass eine ungleichmäßige Beladung der Ladefläche 96 vorliegt. Das Transportsystem 81 ändert die Position der vierten Ladefläche 96 derart, so dass nun die Ladefläche 96 gleichmäßig beladen ist. Die Position der vierten Ladefläche 96 wird wie mit dem Pfeil gekennzeichnet geändert.

Wie erwähnt, weisen die Transportvorrichtungen 10 jeweils einen Signalgeber 64 auf (siehe Figur 1B). Der Signalgeber 64 kann ein Hinweissignal ausgeben, wenn die Paletten 40 so schwer sind, dass die Höchstbeladung der betreffenden Transportvorrichtungen 10 überschritten wird. Das Überschreiten der Höchstbeladung kann mit der Kraftmesseinrichtung 56 erkannt werden.

Weiterhin ist aus der Figur 9 erkennbar, dass die Sensoreinheiten 66 der Transportvorrichtungen 10 in entgegengesetzte Richtungen ausgerichtet sind. Die eine der Transportvorrichtungen 10 erfasst dabei das Umfeld auf der einen Seite der Palette 40, während die andere der Transportvorrichtungen 10 das Umfeld auf der anderen Seite der Palette 40 erfasst.

### Bezugszeichenliste

- 10: Transportvorrichtung
- 10₁ - 10₅: Transportvorrichtung
- 12: Tragstruktur
- 13: Gehäuse
- 14: Außenkontur
- 16: Fahrwerk
- 18: erstes Rad
- 20: zweites Rad
- 22: Antriebseinheit
- 24: erster Antriebsmotor
- 26: zweiter Antriebsmotor
- 28: erstes Getriebe
- 30: zweites Getriebe
- 32: Hubeinrichtung
- 34: Spindelmutter
- 36: dritter Antriebsmotor
- 37: Spindel
- 38: Gegenstand
- 39: Tragabschnitt
- 40: Palette
- 42: Keller
- 44: Noppenmatte
- 46: Spannhülse
- 48: Tellergehäuse
- 50: O-Ring
- 52: Axialrollenlager
- 54: Gummiring
- 56: Kraftmesseinrichtung
- 58: Kraftsensoren
- 60: erste Gruppe
- 62: zweite Gruppe
- 63: Auswerteeinheit
- 64: Signalgeber
- 66: Sensoreinheit
- 67: Kamera
- 68: Sensorabschnitt
- 69: Ultraschallsensor
- 70: Speicher
- 71: laserbasierter Sensor
- 72: Borstenabschnitt
- 74: Selbststabilisierungseinrichtung
- 76: Kommunikationseinrichtung
- 78: Tragegriff
- 80: Nut
- 81: Transportsystem
- 82: Querholz
- 84: Brett
- 86: Master
- 88: Slave
- 90: Master-Sensoreinheit
- 92: Werkhalle
- 94: Kontrolleinheit
- 96: Ladefläche
- 98: Spreizeinrichtung
- 100: Spreizarm
- 102: Führungsbahn
- 104: Kreissektorelement
- 106: Verstelleinheit
- 107: weitere Antriebseinheit
- 108: Kniehebeleinheit
- 109: Antriebsstrang
- 110: Synchronisierungseinheit
- 111: erstes Zahnrad
- 112: Kulissenscheibe
- 113: zweites Zahnrad
- 114: Anschlagelement
- 115: Entkopplungseinheit
- 116: Abstützelement
- 117: Kurvenscheibe
- 118: Feder
- 119: Lagereinheit
- 120: Nut
- 121: Winkelsensor
- 122: Pin
- 124: Abtriebswelle
- 126: Kupplungselement
- 128: erste Stirnfläche
- 130: zweite Stirnfläche
- 132: erste Stirnverzahnung
- 134: zweite Stirnverzahnung
- 136: Rückstellfeder
- 138: Sperreinrichtung
- 140: Anschlag

- AP: plane Außenfläche
- AW: gewölbte Außenfläche
- D: gemeinsame Drehachse
- D1: erste Drehachse
- D2: zweite Drehachse
- R: Rotationsachse

## Patentansprüche

1. Fahrerlose Transportvorrichtung (10) zum Transportieren von Gegenständen (38), umfassend
- eine Tragstruktur (12) mit einer Außenkontur (14),
- ein an der Tragstruktur (12) befestigtes Fahrwerk (16) mit zumindest einem ersten Rad (18) und einem zweiten Rad (20), wobei das erste Rad (18) um eine erste Drehachse (D1) und das zweite Rad (20) um eine zweite Drehachse (D2) drehbar im Fahrwerk (16) gelagert sind,
- eine Antriebseinheit (22), mit welcher das erste Rad (18) und das zweite Rad (20) unabhängig voneinander antreibbar sind, und
- eine Spreizeinrichtung (98) mit mindestens zwei Spreizarmen (100), wobei die Spreizarme (100) mittels einer Verstelleinheit (106) zwischen einer ersten Stellung und einer zweiten Stellung verstellbar sind und die Spreizarme (100) in der zweiten Stellung zumindest teilweise über die Außenkontur (14) hervorragen,
wobei die Spreizeinrichtung (98) drehbar gegenüber dem Fahrwerk (16) ausgestaltet ist,
**dadurch gekennzeichnet, dass** die Spreizarme (100) in vom Zentrum der fahrerlosen Transportvorrichtung (10) radial nach außen verlaufenden Führungsbahnen (102) verschiebbar gelagert sind.

2. Fahrerlose Transportvorrichtung (10) nach Anspruch 1,
**dadurch gekennzeichnet, dass** die Spreizeinrichtung (98) eine weitere Antriebseinheit (107) und einen Antriebsstrang (109) aufweist, mit welchem die weitere Antriebseinheit (107) mit der Verstelleinheit (106) zusammenwirkt.

3. Fahrerlose Transportvorrichtung (10) nach Anspruch 2,
**dadurch gekennzeichnet, dass** im Antriebsstrang (109) eine Entkopplungseinheit (115) angeordnet ist, mit welcher die weitere Antriebseinheit (107) von der Verstelleinheit (106) trennbar ist.

4. Fahrerlose Transportvorrichtung (10) nach einem der vorherigen Ansprüche,
**dadurch gekennzeichnet, dass** die Spreizeinrichtung (98) eine Sperreinrichtung (138) umfasst, mit welcher die Verstelleinheit (106) zumindest dann gesperrt werden kann, wenn sich die Spreizarme (100) in der zweiten Stellung befinden.

5. Fahrerlose Transportvorrichtung (10) nach einem der vorherigen Ansprüche,
**dadurch gekennzeichnet, dass** die Spreizeinrichtung (98) einen Winkelsensor (121) aufweist, mit welchem die Drehstellung der Spreizarme (100) in Bezug auf die erste Drehachse (D1) und/oder die zweite Drehachse (D2) bestimmbar ist.

6. Fahrerlose Transportvorrichtung (10) nach einem der vorherigen Ansprüche,
**dadurch gekennzeichnet, dass** die Verstelleinheit (106) eine Synchronisierungseinheit (110) aufweist, mit welcher die Bewegung der Spreizarme (100) synchronisierbar ist.

7. Fahrerlose Transportvorrichtung (10) nach Anspruch 6,
**dadurch gekennzeichnet, dass** die Verstelleinheit (106) pro Spreizarm (100) eine Kniehebeleinheit (108) umfasst, mit welcher die Spreizarme (100) verstellbar sind und welche mit der Synchronisierungseinheit (110) synchronisiert betätigbar ist.

8. Fahrerlose Transportvorrichtung (10) nach Anspruch 7,
**dadurch gekennzeichnet, dass** die Synchronisierungseinheit (110) eine Kulissenscheibe (112) aufweist, welche mit den Kniehebeleinheiten zusammenwirkt.

9. Fahrerlose Transportvorrichtung (10) nach einem der vorherigen Ansprüche,
**dadurch gekennzeichnet, dass** die Spreizarme (100) an ihren radial äußeren Enden mit Abstützelementen (116) federnd verbunden sind.

10. Fahrerlose Transportvorrichtung (10) nach einem der vorherigen Ansprüche,
**dadurch gekennzeichnet, dass** die Spreizarme (100) an ihren radial äußeren Enden mit einem Anschlagelement (114) verbunden sind, wobei das Anschlagelement (114) in der ersten Stellung an einem Anschlagelement (114) zumindest eines weiteren Spreizarms (100) und/oder an einer Anschlagfläche der Tragstruktur (12) anliegt.

11. Fahrerlose Transportvorrichtung (10) nach einem der vorherigen Ansprüche,
**dadurch gekennzeichnet, dass** die fahrerlose Transportvorrichtung (10) eine mit der Tragstruktur (12) zusammenwirkende Hubeinrichtung (32) zum Anheben und Absenken zumindest eines Tragabschnitts (39), der zum Transportieren der Gegenstände (38) mit denselben zusammenwirkt, umfasst.

12. Fahrerlose Transportvorrichtung (10) nach einem der vorherigen Ansprüche, **dadurch gekennzeichnet, dass**
- die Außenkontur (14) der Tragstruktur (12) in der Draufsicht um eine Rotationsachse (R) im Wesentlichen rotationssymmetrisch ist, und
o der Tragabschnitt (39) und/oder das erste Rad (18) und das zweite Rad (20) innerhalb der Außenkontur (14) angeordnet sind oder bündig mit der Außenkontur (14) abschließen und/oder
o die Spreizarme (100) in der ersten Stellung innerhalb der Außenkontur (14) angeordnet sind.

13. Fahrerlose Transportvorrichtung (10) nach einem der vorherigen Ansprüche,
**dadurch gekennzeichnet, dass** die Transportvorrichtung (10) einen Speicher (70) für elektrische Energie aufweist, welcher in der Draufsicht abschnittsweise über die Außenkontur (14) der Tragstruktur (12) hervorragt, wobei der Speicher (70) bewegbar an der Tragstruktur (12) befestigt ist.

14. Fahrerloses Transportsystem (81), umfassend
- eine Mehrzahl von fahrerlosen Transportvorrichtungen (10) nach einem der vorherigen Ansprüche,
- eine Kontrolleinheit (94) zum Steuern oder Regeln der fahrerlosen Transportvorrichtungen (10), und
- eine Kommunikationseinrichtung (76), mit welcher Informationen zwischen der Kontrolleinheit (94) und den fahrerlosen Transportvorrichtungen (10) ausgetauscht werden können.

## Claims

1. Driverless transport device (10) for transporting objects (38), comprising
- a supporting structure (12) having an outside contour (14),
- a chassis (16) which is fastened to the supporting structure (12) and comprises at least one first wheel (18) and one second wheel (20), wherein the first wheel (18) is mounted in the chassis (16) so as to be rotatable about a first axis of rotation (D1) and the second wheel (20) is mounted therein so as to be rotatable about a second axis of rotation (D2),
- a drive unit (22), by means of which the first wheel (18) and the second wheel (20) are driveable independently of one another, and
- a spreading means (98) having at least two spreading arms (100), wherein the spreading arms (100) are adjustable by means of an adjustment unit (106) between a first position and a second position, and the spreading arms (100) protrude, in the second position, beyond the outside contour (14) at least in part,
wherein the spreading means (98) is configured to be rotatable relative to the chassis (16),
**characterised in that** the spreading arms (100) are displaceably mounted in guideways (102) that extend radially outwards from the centre of the driverless transport device (10).

2. Driverless transport device (10) according to claim 1,
**characterised in that** the spreading means (98) comprises a further drive unit (107) and a drivetrain (109) with which the further drive unit (107) interacts with the adjustment unit (106).

3. Driverless transport device (10) according to claim 2,
**characterised in that** a decoupling unit (115) is arranged in the drivetrain (109), by means of which decoupling unit the further drive unit (107) can be separated from the adjustment unit (106).

4. Driverless transport device (10) according to any of the preceding claims, **characterised in that** the spreading means (98) comprises a blocking device (138), by means of which the adjustment unit (106) can be blocked at least when the spreading arms (100) are in the second position.

5. Driverless transport device (10) according to any of the preceding claims, **characterised in that** the spreading means (98) comprises an angle sensor (121), by means of which the rotational position of the spreading arms (100) with respect to the first axis of rotation (D1) and/or the second axis of rotation (D2) can be determined.

6. Driverless transport device (10) according to any of the preceding claims, **characterised in that** the adjustment unit (106) comprises a synchronisation unit (110), by means of which the movement of the spreading arms (100) can be synchronised.

7. Driverless transport device (10) according to claim 6,
**characterised in that** the adjustment unit (106) comprises a toggle lever unit (108) per spreading arm (100), by means of which the spreading arms (100) are adjustable and which can be actuated in a synchronised manner with the synchronisation unit (110).

8. Driverless transport device (10) according to claim 7,
**characterised in that** the synchronisation unit (110) comprises a guide plate (112) which interacts with the toggle lever units.

9. Driverless transport device (10) according to any of the preceding claims, **characterised in that** the spreading arms (100) are flexibly connected to support elements (116) at their radially outside ends.

10. Driverless transport device (10) according to any of the preceding claims, **characterised in that** the spreading arms (100) are connected to a stop element (114) at their radially outside ends, wherein the stop element (114) rests, in the first position, on a stop element (114) of at least one further spreading arm (100) and/or on a stop surface of the supporting structure (12).

11. Driverless transport device (10) according to any of the preceding claims, **characterised in that** the driverless transport device (10) comprises a lifting device (32) which interacts with the supporting structure (12) and is intended for raising and lowering at least a supporting portion (39), which interacts with the objects (38) for transporting them.

12. Driverless transport device (10) according to any of the preceding claims, **characterised in that**
- the outside contour (14) of the supporting structure (12) is substantially rotationally symmetrical, in plan view, about a rotational axis (R), and
- the supporting portion (39) and/or the first wheel (18) and the second wheel (20) are arranged within the outside contour (14) or end flush with the outside contour (14), and/or
- the spreading arms (100) are arranged inside the outside contour (14) in the first position.

13. Driverless transport device (10) according to any of the preceding claims, **characterised in that** the transport device (10) comprises a store (70) for electrical energy which, in plan view, protrudes in portions beyond the outside contour (14) of the supporting structure (12), wherein the store (70) is movably fastened to the supporting structure (12).

14. Driverless transport system (81), comprising
- a plurality of driverless transport devices (10) according to any of the preceding claims,
- a control unit (94) for open-loop or closed-loop control of the driverless transport devices (10), and
- a communication device (76), by means of which information can be exchanged between the control unit (94) and the driverless transport devices (10).

## Revendications

1. Dispositif (10) de transport sans chauffeur de transport d'objets (38), comprenant
- une structure (12) porteuse ayant un contour (14) extérieur,
- un châssis (16) fixé à la structure (12) porteuse et ayant au moins une première roue (18) et une deuxième roue (20), dans lequel la première roue (18) est montée dans le châssis (16) tournante autour d'un premier axe (D1) de rotation et la deuxième (20) autour d'un deuxième axe (D2) de rotation,
- une unité (22) d'entraînement, par laquelle la première roue (18) et la deuxième (20) peuvent être entraînées indépendamment l'une de l'autre, et
- un dispositif (98) d'écartement ayant au moins deux bras (100) d'écartement, dans lequel les bras (100) d'écartement peuvent être déplacés au moyen d'une unité (106) de déplacement entre une première position et une deuxième position et les bras (100) d'écartement font dans la deuxième position saillie au moins en partie du contour (14) extérieur,
dans lequel le dispositif (98) d'écartement est conformé de manière tournante par rapport au châssis (16),
**caractérisé en ce que** les bras (100) d'écartement sont montés coulissants dans des voies (102) de guidage s'étendant vers l'extérieur radialement depuis le centre du dispositif (10) de transport sans conducteur.

2. Dispositif (10) de transport sans conducteur suivant la revendication 1,
**caractérisé en ce que** le dispositif (98) d'écartement a une autre unité (107) d'entraînement et une chaîne (109) cinématique, par laquelle l'autre unité (107) d'entraînement coopère avec l'unité (106) de déplacement.

3. Dispositif (10) de transport sans conducteur suivant la revendication 2,
**caractérisé en ce que** dans la chaîne (109) cinématique est montée une unité (115) de découplage, par laquelle l'autre unité (107) d'entraînement peut être séparée de l'unité (106) de déplacement.

4. Dispositif (10) de transport sans conducteur suivant l'une des revendications précédente,
**caractérisé en ce que** le dispositif (98) d'écartement comprend un dispositif (138) de blocage, qui peut bloquer l'unité (106) de déplacement au moins lorsque les bras (100) d'écartement se trouvent dans la deuxième position.

5. Dispositif (10) de transport sans conducteur suivant l'une des revendications précédentes,
**caractérisé en ce que** le dispositif (98) d'écartement a un capteur (121) d'angle, par lequel la position en rotation des bras (100) d'écartement par rapport au premier axe (D1) de rotation et/ou au deuxième axe (D2) de rotation peut être déterminée.

6. Dispositif (10) de transport sans conducteur suivant l'une des revendications précédentes,
**caractérisé en ce que** l'unité (106) de déplacement à une unité (110) de synchronisation, par laquelle le déplacement des bras (100) d'écartement peut être synchronisé.

7. Dispositif (10) de transport sans conducteur suivant la revendication 6,
**caractérisé en ce que** l'unité (106) de déplacement comprend, par bras (100) d'écartement, une unité (108) de genouillère, par laquelle les bras (100) d'écartement peuvent être déplacés et qui peut être actionnée de manière synchronisée par l'unité (110) de synchronisation.

8. Dispositif (10) de transport sans conducteur suivant la revendication 7,
**caractérisé en ce que** l'unité (110) de synchronisation a un disque (112) de coulisse, qui coopère avec l'unité de genouillère.

9. Dispositif (10) de transport sans conducteur suivant l'une des revendications précédentes,
**caractérisé en ce que** les bras (100) d'écartement sont, à leurs extrémités extérieures radialement, reliés élastiquement à des éléments (116) d'appui.

10. Dispositif (10) de transport sans conducteur suivant l'une des revendications précédentes,
**caractérisé en ce que** les bras (100) d'écartement sont, à leurs extrémités extérieures radialement, reliés à un élément (114) de butée, dans lequel l'élément (114) de butée s'applique dans la première position à un élément (114) de butée d'au moins un autre bras (100) d'écartement et/ou à une surface de butée de la structure (12) porteuse.

11. Dispositif (10) de transport sans conducteur suivant l'une des revendications précédentes,
**caractérisé en ce que** le dispositif (10) de transport sans conducteur comprend un dispositif (32) de levage coopérant avec la structure (12) porteuse pour lever et abaisser au moins une partie (39) porteuse, qui coopère pour le transport des objets (38) avec ceux-ci.

12. Dispositif (10) de transport sans conducteur suivant l'une des revendications précédentes, **caractérisé en ce que**
- le contour (14) extérieur de la structure (12) porteuse est dans une vue en plan sensiblement de révolution autour de l'axe (R) de révolution, et
o la partie (39) porteuse et/ou la première roue (18) et la deuxième roue (20) sont disposées à l'intérieur du contour (14) extérieur ou sont au ras du contour (14) extérieur et/ou
o les bras (100) d'écartement sont dans la première position à l'intérieur du contour (14) extérieur.

13. Dispositif (10) de transport sans conducteur suivant l'une des revendications précédentes,
**caractérisé en ce que** le dispositif (10) de transport a un accumulateur (70) d'énergie électrique, qui dans la vue en plan dépasse par endroit du contour (14) extérieur de la structure (12) porteuse, l'accumulateur (70) étant fixé de manière amovible à la structure (12) porteuse.

14. Système (81) de transport sans conducteur, comprenant
- une pluralité de dispositifs (10) de transport sans conducteur suivant l'une des revendications précédentes,
- une unité (94) de commande pour commander ou régler les dispositifs (10) de transport sans conducteur, et
- un dispositif (76) de communication, par lequel des informations peuvent être échangées entre l'unité (94) de commande et les dispositifs (10) de transport sans conducteur.
